# EUROPEAN PATENT APPLICATION

(11) **EP 1 204 041 A2**
(43) Date of publication of application: **08.05.2002**
(21) Application number: 01309239.0
(22) Date of filing: 31.10.2001
(51) Int. Cl.: G06F 17/30

(54) **Database management system and method**

(30) Priority: 02.11.2000 JP 2000336528
(71) Applicant: CANON KABUSHIKI KAISHA, Tokyo (JP)
(72) Inventor: Wakai, Masanori, c/o Canon Kabushiki Kaisha, Ohta-ku, Tokyo (JP); Yamamoto, Naoko, c/o Canon Kabushiki Kaisha, Ohta-ku, Tokyo (JP)
(74) Representative: Beresford, Keith Denis Lewis

(57) **Abstract**

A database is manipulated using an application object which is referred to by an application program.

## Description

### FIELD OF THE INVENTION

The present invention relates to an information processing apparatus and method for processing a database that manages data, and a computer readable memory.

### BACKGROUND OF THE INVENTION

In prior arts, databases are often used to process permanent data, but complicated know-how-including a coding sequence unique to a database module is required for this purpose.

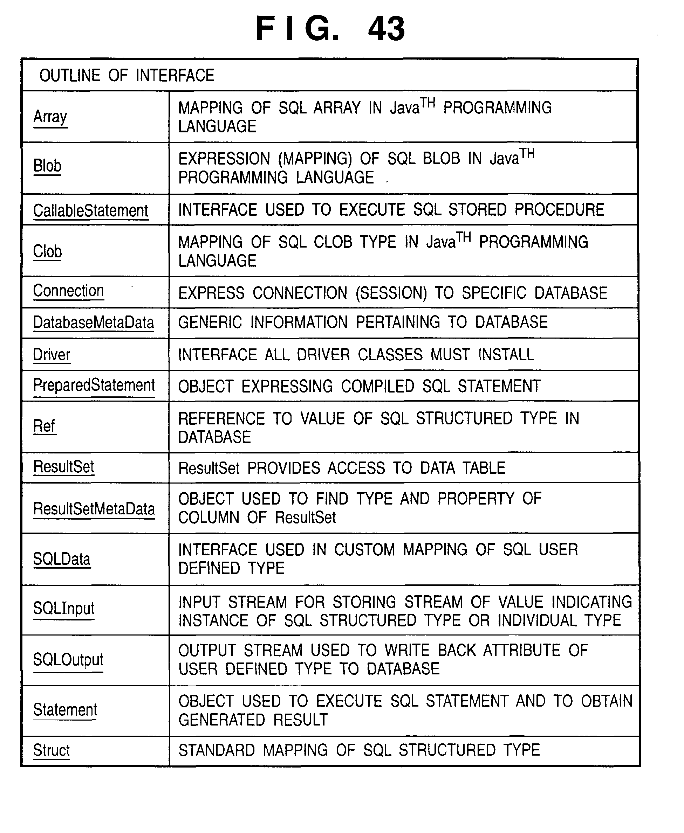

Fig. 43 shows an example of an interface of a relational database used in an object-oriented language. To faithfully fulfill the purpose of the object-oriented language, individual objects should have attribute information, which must not be independent from objects. That is, as a practical problem, one must understand many interfaces to handle a database, resulting in more complicated application program development.

Some development tools and Japanese Patent Laid-Open No. 11-224184 provide a specific development environment to automatically generate programming codes, thus reducing the load on a programmer. In some database engines, a database can be handled by implementing required methods by succeeding specific classes or converting objective class files by a tool.

Further, in order to eliminate the complexity of application program development anywise, a development tool using a wizard is proposed. An application program makes operations according to a user interface provided by a development tool, thus generating a framework of an objective program. However, in this case, the programmer must understand the use methods of the development tool and wizard, and must understand an automatically generated program to some extent upon debugging.

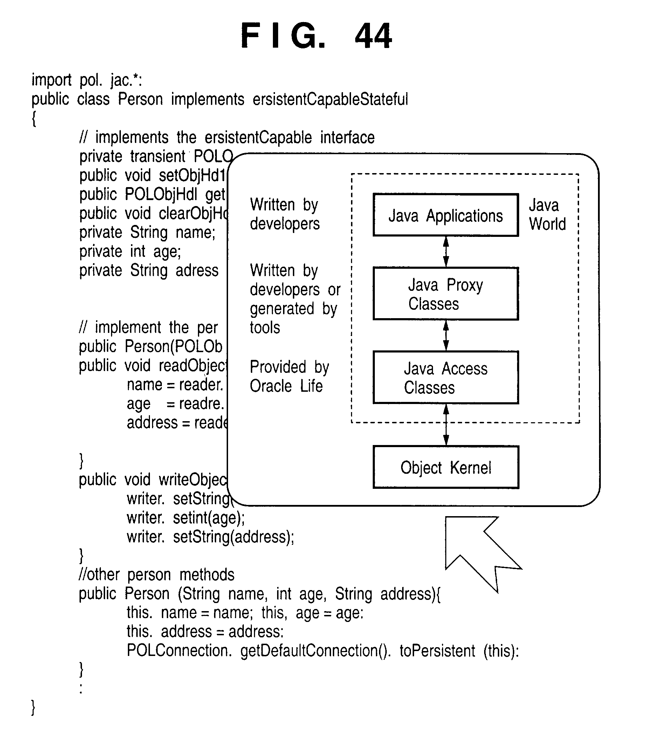

Fig. 44 shows an example of a relational database hidden by an interface of an object-oriented database, which is done to eliminate the complexity of application program development anywise. An application programmer can use a database as an object-oriented database. For this reason, complexity can be eliminated slightly. However, in practice, the application programmer himself or herself must generate programming codes used to hide the relational database, as shown in Fig. 44.

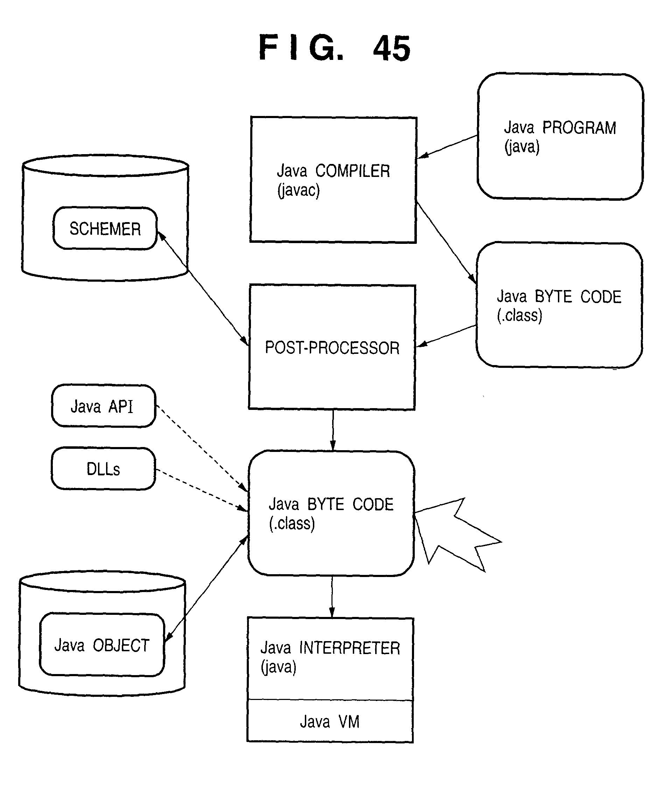

Fig. 45 shows an example using a post-processor, which is done to eliminate the complexity of application program development anywise. An application programmer converts generated programming codes using a post-processor to expand them to access a database. In this case, the programmer must understand the use method of the post-processor, and must be able to tell which files with identical extensions have had their database access function expanded. Furthermore, since processing is done for respective classes, whether or not instances generated from an identical class are stored in a database cannot be arbitrarily selected.

As described above, with any of the above methods, since unique know-how is required under specific limitations, an efficiency drop in development cannot be avoided.

### SUMMARY OF THE INVENTION

The present invention has been made in consideration of the aforementioned problems, and has its object to provide an information processing apparatus and method, which can improve application development efficiency, and a computer readable memory.

According to the present invention, the foregoing object is attained by providing an information processing apparatus for processing a database that manages data, by comprising;
a database for storing the data; and
database manipulation means for manipulating the database using an application object which is referred to by an application program.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a block diagram showing the hardware arrangement of an information processing apparatus according to an embodiment of the present invention;
Fig. 2 is a flow chart showing the processing executed by the information processing apparatus of this embodiment;
Fig. 3 shows an example of a database processing window of this embodiment;
Fig. 4 is a flow chart showing details of a database process in step s205 of this embodiment;
Fig. 5 shows an example of a transaction generation window of this embodiment;
Fig. 6 is a flow chart showing details of a transaction generate process in step s406 of this embodiment;
Fig. 7 shows an example of a transaction processing window of this embodiment;
Fig. 8 is a flow chart showing details of a transaction process in step s408 of this embodiment;
Fig. 9 shows an example of an additional object select window of this embodiment;
Fig. 10 is a flow chart showing details of an object select/add process corresponding to an object add instruction in an event-induced process of this embodiment;
Fig. 11 shows an example of an object edit window upon creating a new object in this embodiment;
Fig. 12 is a flow chart showing details of an object generate process in step s1006 of this embodiment;
Fig. 13 shows an example of a class select window of this embodiment;
Fig. 14 shows an example of an object edit window upon editing an existing object in this embodiment;
Fig. 15 is a flow chart showing details of an object select/edit process of this embodiment;
Fig. 16 shows an example of an object reference window upon referring to an existing object in this embodiment;
Fig. 17 is a flow chart showing details of an object select/delete process of this embodiment;
Fig. 18 is a flow chart showing details of an all object acquisition confirm process in steps s1503 and s1703 of this embodiment;
Fig. 19 is a flow chart showing details of an object addition confirm process in step s1007 of this embodiment;
Fig. 20 is a flow chart showing details of an object update confirm process in step s1509 of this embodiment;
Fig. 21 is a flow chart showing details of an object deletion confirm process in step s1709 of this embodiment;
Fig. 22 is a diagram showing the functional arrangement of the information processing apparatus of this embodiment;
Fig. 23 shows internal data of a DB transaction of this embodiment;
Fig. 24 is a flow chart showing details of a DB transaction generate process in step s603 of this embodiment;
Fig. 25 is a flow chart showing details of a DB transaction start process in steps s1801, s1901, s2001, and s2101 of this embodiment;
Fig. 26 is a flow chart showing details of a DB transaction confirm process in steps s1804, s1904, s2004, and s2104 of this embodiment;
Fig. 27 is a flow chart showing details of a DB transaction cancel process in steps s1805, s1905, s2005 and s2105 of this embodiment;
Fig. 28 shows the relationships among objects used in the information processing apparatus of this embodiment;
Fig. 29 shows programming codes of an application object of this embodiment;
Fig. 30 shows a list of database objects of this embodiment;
Fig. 31 is a flow chart showing details of an all object acquire process in step s1802 of this embodiment;
Fig. 32 is a flow chart showing details of an object add process in step s1902 of this embodiment;
Fig. 33 is a flow chart showing details of an object update process in step s2002 of this embodiment;
Fig. 34 is a flow chart showing details of an object delete process in step s2102 of this embodiment;
Fig. 35 is a flow chart showing details of an all DB object acquire process in step s5902 of this embodiment;
Fig. 36 is a flow chart showing details of a DB object generate/add process in step s6002 of this embodiment;
Fig. 37 is a flow chart showing details of a DB object delete process in step s6204 of this embodiment;
Fig. 38 is a flow chart showing details of a DB object value set process in steps s5907 and s6003 of this embodiment;
Fig. 39 is a flow chart showing details of an object generate process in step s5906 of this embodiment;
Fig. 40 is a flow chart showing details of an object value set process in step s5907 of this embodiment;
Fig. 41 is a flow chart showing details of an all writable field name acquire process in steps s7301 and s7501 of this embodiment;
Fig. 42 shows an example of programming codes of this embodiment;
Fig. 43 shows an example of an interface of a relational database in the prior art;
Fig. 44 shows an example of programming codes that hide a relational database in the prior art; and
Fig. 45 shows an example using a post-processor in the prior art.

### DESCRIPTION OF THE PREFERRED EMBODIMENTS

Preferred embodiments of the present invention will be described in detail hereinafter with reference to the accompanying drawings.

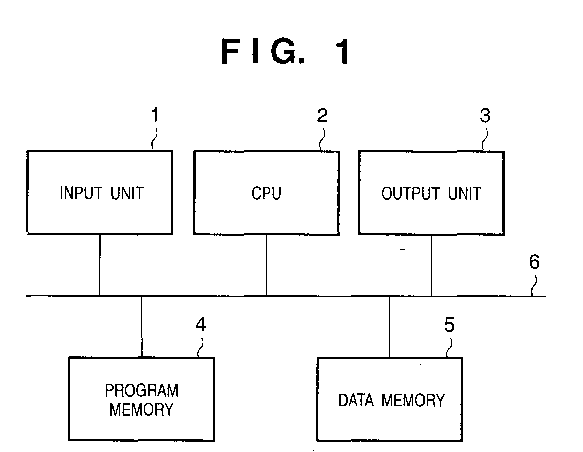

Fig. 1 is a block diagram showing the hardware arrangement of an information processing apparatus of this embodiment.

Referring to Fig. 1, reference numeral 1 denotes an input unit for inputting information (data). Reference numeral 2 denotes a CPU which makes arithmetic operations, logical decisions, and the like for various processes to control respective building components connected to a bus 6. Reference numeral 3 denotes an output unit for outputting information (data). The output unit 3 includes a display such as an LCD, CRT, or the like, or a recording apparatus such as a printer or the like.

Reference numeral 4 denotes a program memory for storing programs for control by the CPU 2 that includes processing sequences of flow charts to be described later. The program memory 4 may comprise a ROM or a RAM to which a program is loaded from an external storage device or the like.

Reference numeral 5 denotes a data memory for storing data produced by various processes, and also data of a database (DB) to be described later. The data memory 5 comprises, e.g., a RAM, and data of the database are loaded from a nonvolatile external storage medium prior to processes or are referred to as needed.

Reference numeral 6 denotes a bus for transferring address signals that designate building components to be controlled by the CPU 2, control signals for controlling respective building components, and data exchanged among respective building components.

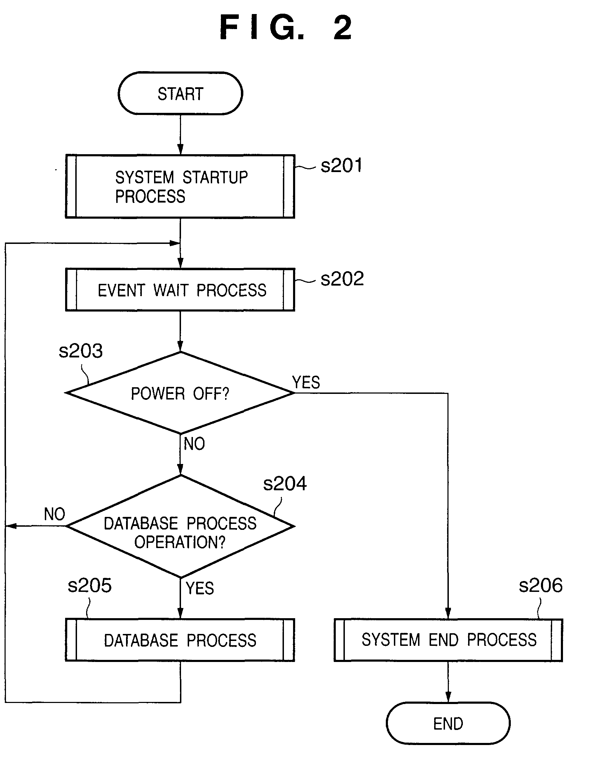

Fig. 2 is a flow chart showing the processing executed by the information processing apparatus of this embodiment.

As shown in Fig. 2, when the system starts, a system startup process is executed in step s201 to initialize various data. In step s202, an event wait process is executed to wait for events corresponding to user's operations, events corresponding to various state changes, and the like.

It is then checked in step s203 if the generated event is a power OFF instruction. If the event is not a power OFF instruction (NO in step s203), the flow advances to step s204. It is checked in step s204 if the event is a database processing operation instruction. If the event is not a database processing operation instruction (NO in step s204), the flow returns to step s202. On the other hand, if the event is a database processing operation instruction (YES in step s204), the flow advances to step s205 to execute a database process, and the flow then returns to step s202 to repeat the above process.

On the other hand, if it is determined in step s203 that the event is a power OFF instruction (YES in step s203), the flow advances to step s206 to execute a system end process, and the processing ends.

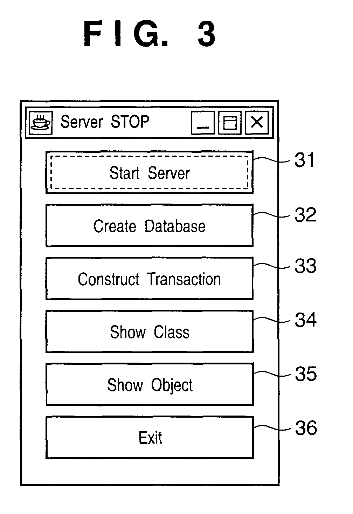

An example of the database processing window displayed in the database process in step s205 will be explained below using Fig. 3.

Fig. 3 shows an example of the database processing window of this embodiment.

Reference numeral 31 denotes a button for instructing the start of a database server service. Reference numeral 32 denotes a button for instructing creation of a database. Reference numeral 33 denotes a button for instructing generation of a transaction. Reference numeral 34 denotes a button for instructing display of class definition information. Reference numeral 35 denotes a button for instructing display of object storage information. Reference numeral 36 denotes a button for instructing the end of the database process.

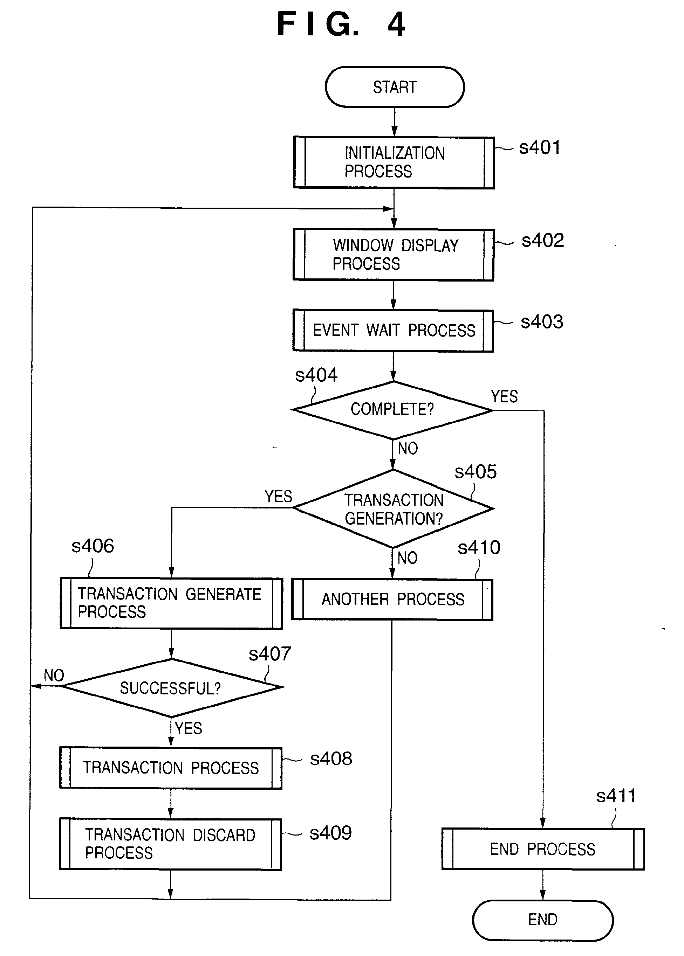

Details of the database process in step s205 will be described below using Fig. 4.

Fig. 4 is a flow chart showing details of the database process in step s205 of this embodiment.

When the database process is launched, an initialization process is executed in step s401 to initialize various internal data.

In step s402, a window display process is executed to display the database processing window described using Fig. 3. In step s403, an event wait process is executed to wait for an event corresponding to user's operation.

It is checked in step s404 if an event generated in response to user's operation is an end instruction. If the event is an end instruction (YES in step s404), the flow advances to step s411 to execute an end process, thus ending the processing. On the other hand, if the event is not an end instruction (NO in step s404), the flow advances to step s405.

It is checked in step s405 if the event is a transaction generation instruction. If the event is not a transaction generation instruction (NO in step s405), the flow advances to step s410 to execute a process corresponding to that event, and the flow returns to step s402 to repeat the aforementioned process. On the other hand, if the event is a transaction generation instruction (YES in step s405), the flow advances to step s406.

In step s406, a transaction generate process is executed to generate a transaction corresponding to a condition designated by the user. It is then checked in step s407 if transaction generation has succeeded. If transaction generation has failed (NO in step s407), the flow returns to step s402 to repeat the above process. On the other hand, if transaction generation has succeeded (YES in step s407), the flow advances to step s408.

In step s408, a transaction process is executed according to a user's instruction. In step s409, a transaction discard process is executed to discard the processed transaction, which becomes unnecessary, and the flow returns to step s402 to repeat the above process.

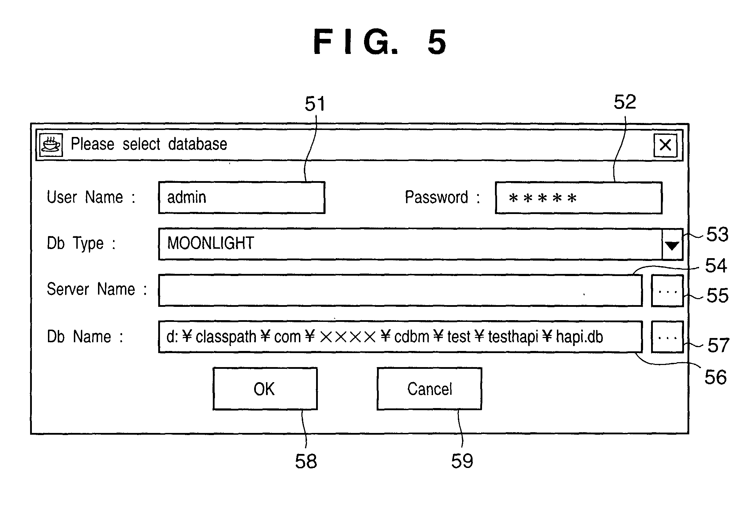

An example of the transaction generation window displayed in the transaction generate process in step s406 will be described below using Fig. 5.

Fig. 5 shows an example of the transaction generation window of this embodiment.

Reference numeral 51 denotes an input area of a user name. Reference numeral 52 denotes an input area of a password corresponding to the user name. Reference numeral 53 denotes a combo box used to designate the type of database. Reference numeral 54 denotes an input area of a server name that provides a connection service to a database. Reference numeral 55 denotes a button for displaying a server name select dialog used when a server name to be input to the server name input area is unknown. Reference numeral 56 denotes an input area of a database name. Reference numeral 57 denotes a button for displaying a database name select dialog used when a database name to be input to the database name input area is unknown.

Reference numeral 58 denotes a button used when transaction generation using the values designated in the respective areas is instructed. Reference numeral 59 denotes a button for canceling transaction generation.

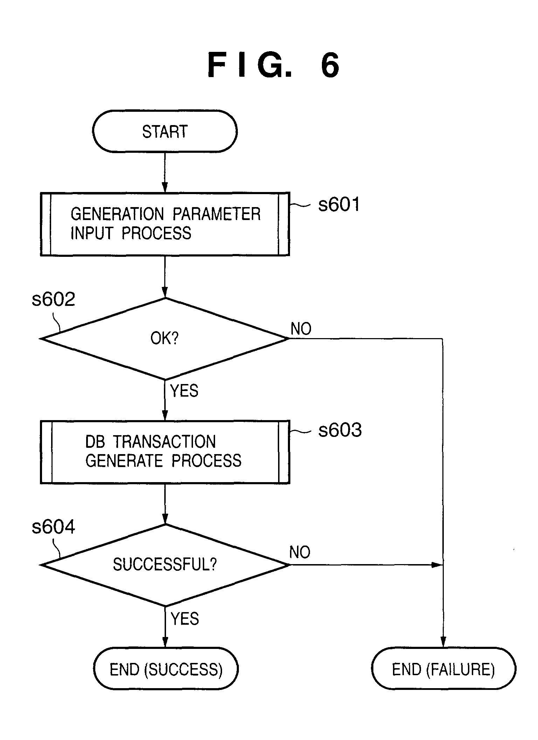

Details of the transaction generate process in step s406 will be described below using Fig. 6.

Fig. 6 is a flow chart showing details of the transaction generate process in step s406 of this embodiment.

When the transaction generate process is launched, a generation parameter input process is executed in step s601 to display the transaction generate processing window described using Fig. 5, thus allowing the user to designate various parameters.

It is then checked in step s602 if the user has instructed generation of a transaction in the generation parameter input process. If transaction generation has been instructed (YES in step s602), the flow advances to step s603 to execute a DB transaction generate process, thus generating a transaction corresponding to various parameters designated by the user.

It is checked in step s604 if the DB transaction generate process has succeeded. If the DB transaction generate process has succeeded (YES in step s604), the processing ends as "success".

On the other hand, if it is determined in step s604 that the DB transaction generate process has failed (NO in step s604), or if it is determined in step s602 that transaction generation has not been instructed (NO in step s602), the processing ends as "failure".

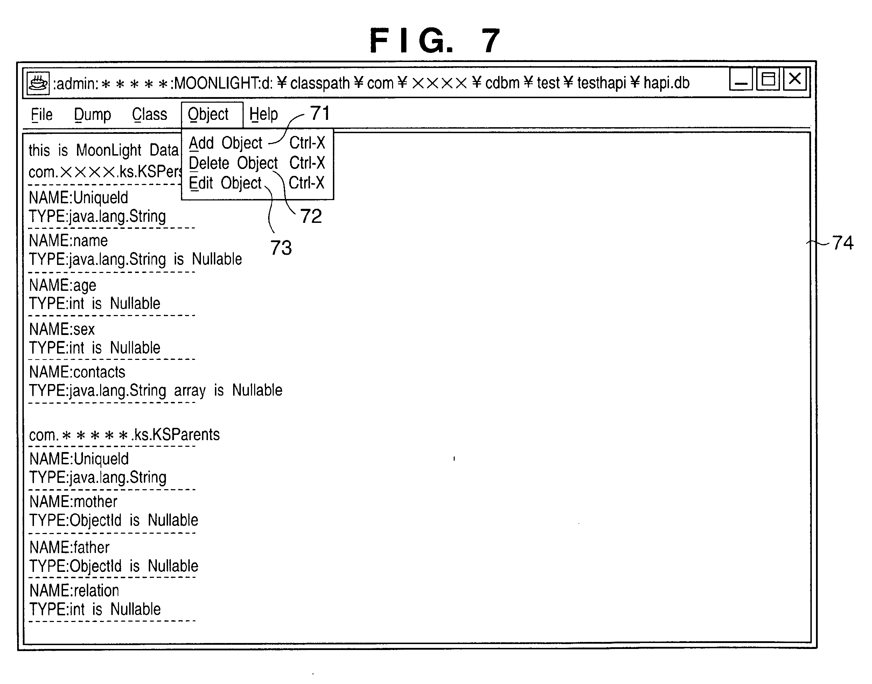

An example of the transaction processing window displayed in the transaction process in step s408 will be described below using Fig. 7.

Fig. 7 shows an example of the transaction processing window of this embodiment.

Reference numeral 71 denotes a menu item for instructing addition of an object. Reference numeral 72 denotes a menu item for instructing deletion of an object. Reference numeral 73 denotes a menu item for instructing edit of an object.

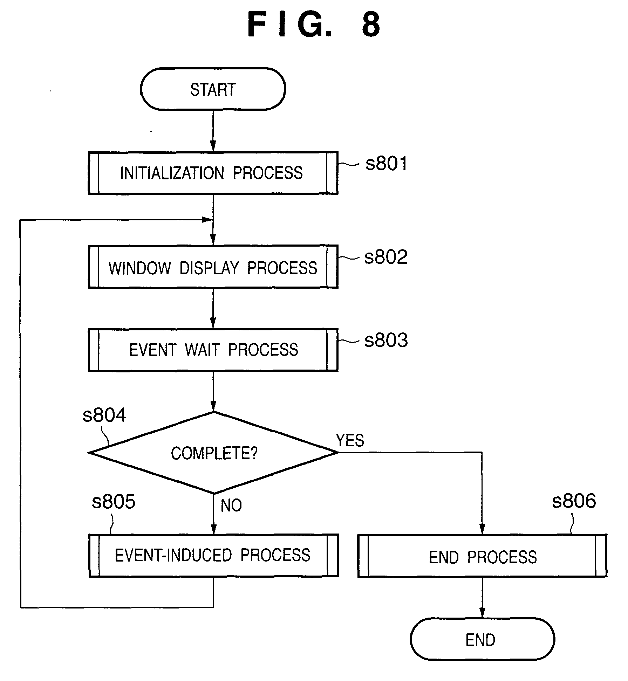

Details of the transaction process in step s408 will be described below using Fig. 8.

Fig. 8 is a flow chart showing details of the transaction process in step s408 of this embodiment.

When the transaction process is launched, an initialization process is executed in step s801 to initialize various internal data.

In step s802, a window display process is executed to display the transaction processing window described using Fig. 7. In step s803, an event wait process is executed to wait for an event corresponding to user's operation.

It is checked in step s804 if an event generated in response to user's operation is an end instruction. If the event is an end instruction (YES in step s804), the flow advances to step s806 to execute an end process, thus ending the processing. On the other hand, if the event is not an end instruction (NO in step s804), the flow advances to step s805 to execute an event-induced process, i.e., to execute a process corresponding to the event. After that, the flow returns to step s802 to repeat the above process.

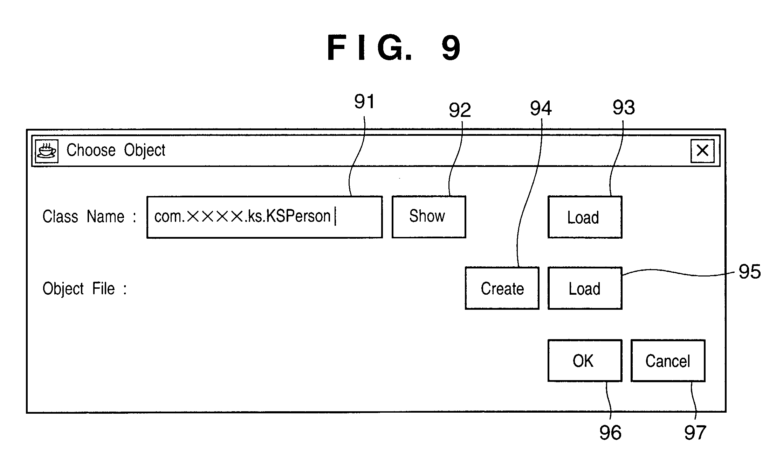

An example of an additional object select window displayed by an object select/add process corresponding to an object add instruction in the event-induced process in step s805 will be explained below using Fig. 9.

Fig. 9 shows an example of the additional object select window of this embodiment.

Reference numeral 91 denotes an input area of a class name. Reference numeral 92 denotes a button for displaying a class information dialog that displays information of a class designated by the class name input area. Reference numeral 93 denotes a button for displaying a class file select dialog, which is used to select and load a file that stores class information used when a class name to be input to the class name input area is unknown.

Reference numeral 94 denotes a button for generating an object corresponding to the class designated by the class name input area. Reference numeral 95 denotes a button for displaying an object file select dialog used to select/load an existing object file.

Reference numeral 96 denotes a button for instructing addition of an object generated or loaded by the corresponding button. Reference numeral 97 denotes a button for canceling addition of an object.

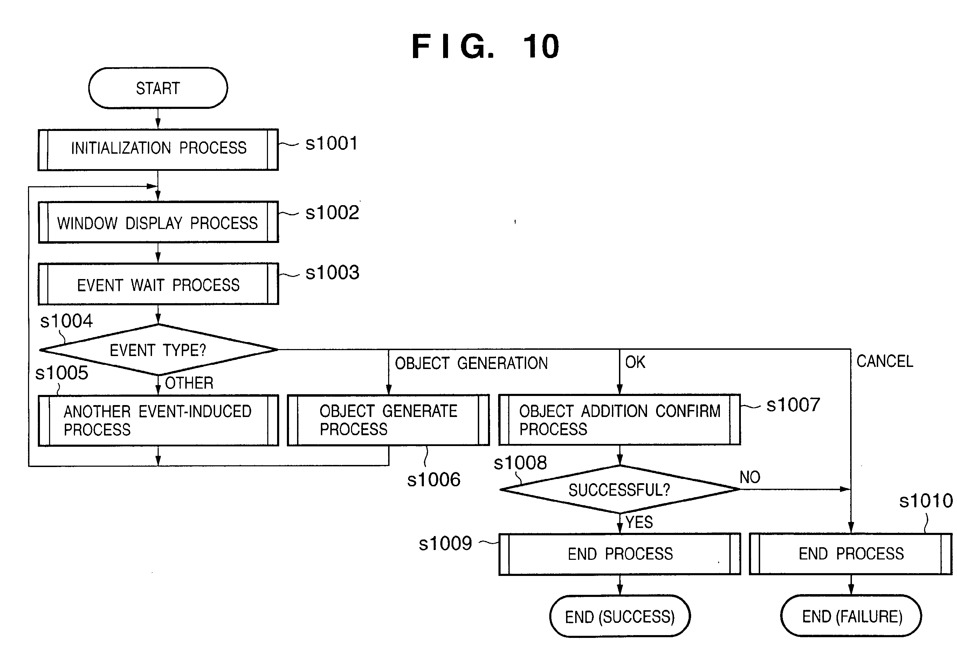

Details of the object select/add process corresponding to the object add instruction in the event-induced process in step s805 will be described below using Fig. 10.

Fig. 10 is a flow chart showing details of the object select/add process corresponding to the object add instruction in the event-induced process in this embodiment.

When the object select/add process is launched, an initialization process is executed in step s1001 to initialize various internal data.

In step s1002, a window display process is executed to display the additional object select window described using Fig. 9. In step s1003, an event wait process is executed to wait for an event corresponding to user's operation.

In step s1004, the type of event generated in response to user's operation is determined, and the control branches to a corresponding process.

If the event type is an object generation instruction, the flow advances to step s1006 to execute an object generate process. After an object is generated, the flow returns to step s1002 to repeat the above process.

If the event type is an add instruction of the generated or loaded object, the flow advances to step s1007 to execute an object addition confirm process. After the object is added to the database, that change is confirmed. As a result, it is checked in step s1008 if a change in object has succeeded. If a change in object has succeeded (YES in step s1008), the flow advances to step s1009 to execute an end process, and the processing ends as "success". On the other hand, if a change in object has failed (NO in step s1008), an end process is executed in step s1010, and the processing ends as "failure".

If the event type is other than those described above, the flow advances to step s1005 to execute a process corresponding to another event by another event-induced process. After that, the flow returns to step s1002 to repeat the above process.

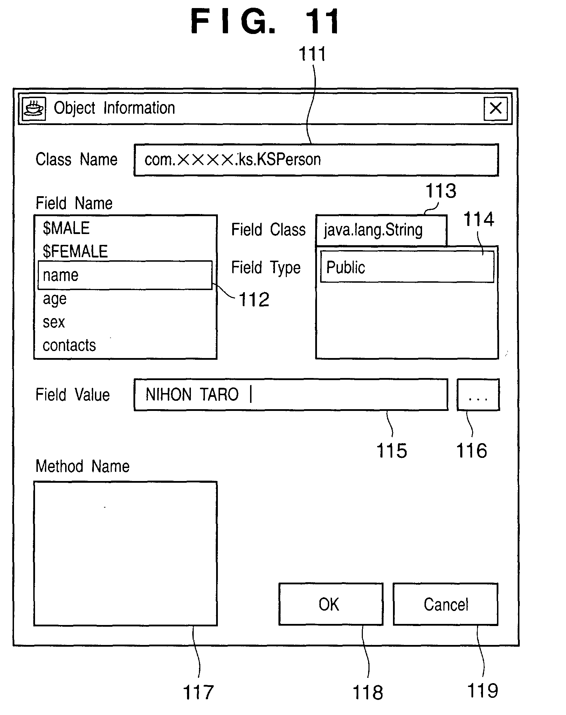

An example of an object edit window upon creation of a new object displayed in the object generate process in step s1006 will be described below using Fig. 11.

Fig. 11 shows an example of an object edit window upon creating a new object in this embodiment.

Reference numeral 111 denotes an area indicating the class name of an object to be edited. Reference numeral 112 denotes an area indicating a list of field names that the object class has. Reference numeral 113 denotes an area indicating the class name of a field selected from the field name list. Reference numeral 114 denotes an area indicating an attribute of that field.

Reference numeral 115 denotes an input area of a value to be stored in that field. Reference numeral 116 denotes a button for displaying an object designation dialog used to designate an object which is hard to directly input to the input area. Reference numeral 117 denotes an area indicating a list of method names that the object class has.

Reference numeral 118 denotes a button used when the user instructs confirmation of the edit contents of the edited object. Reference numeral 119 denotes a button for canceling the edit contents of the object.

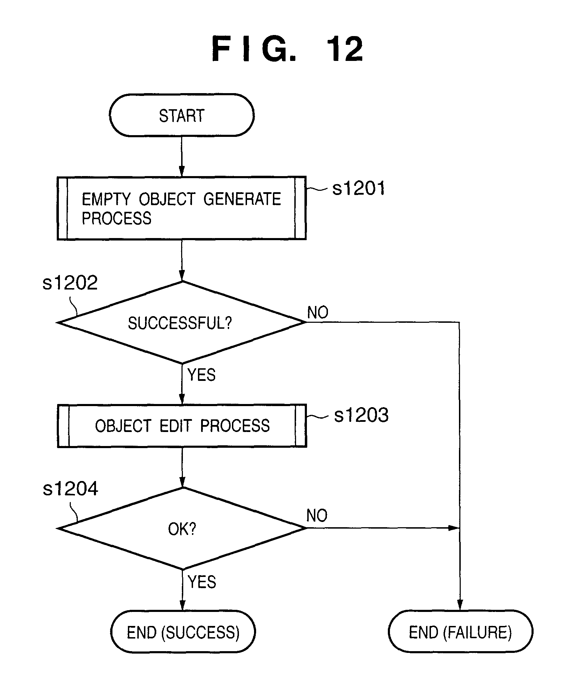

Details of the object generate process in step s1006 will be described below using Fig. 12.

Fig. 12 is a flow chart showing details of the object generate process in step s1006 of this embodiment.

When the object generate process is launched, an empty object generate process is executed in step s1201 to generate a default instance corresponding to the designated class.

It is then checked in step s1202 if generation of a default instance has succeeded as a result of the empty object generate process. If generation of a default instance has succeeded (YES in step s1202), the flow advances to step s1203 to execute an object edit process, and the object edit window described using Fig. 11 is displayed to accept user's operation.

It is checked in step s1204 if confirmation of the edit contents of the object has been instructed as a result of the object edit process. If confirmation of the edit contents of the object has been instructed (YES in step s1204), the processing ends as "success".

On the other hand, if it is determined in step s1204 that confirmation of the edit contents of the object has not been instructed (NO in step s1204) or if it is determined in step s1202 that generation of a default instance has failed (NO in step s1202), the processing ends as "failure".

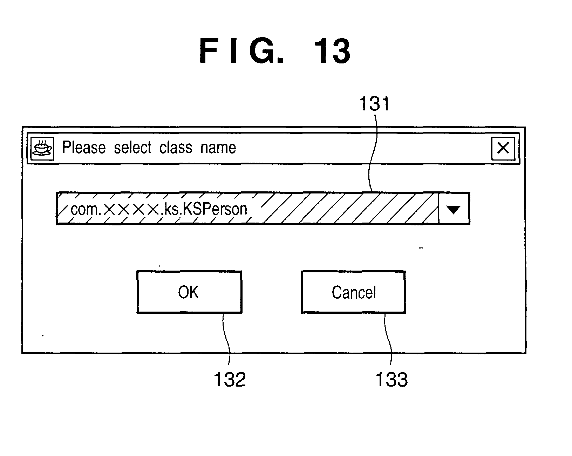

An example of a class select window displayed by the object select/edit process corresponding to the object edit instruction in the event-induced process in step s805 will be described below using Fig. 13.

Fig. 13 shows an example of the class select window of this embodiment.

Reference numeral 131 denotes a class name select list. Reference numeral 132 denotes a button for instructing edit of an object corresponding to the class selected from the list. Reference numeral 133 denotes a button for canceling edit of the object.

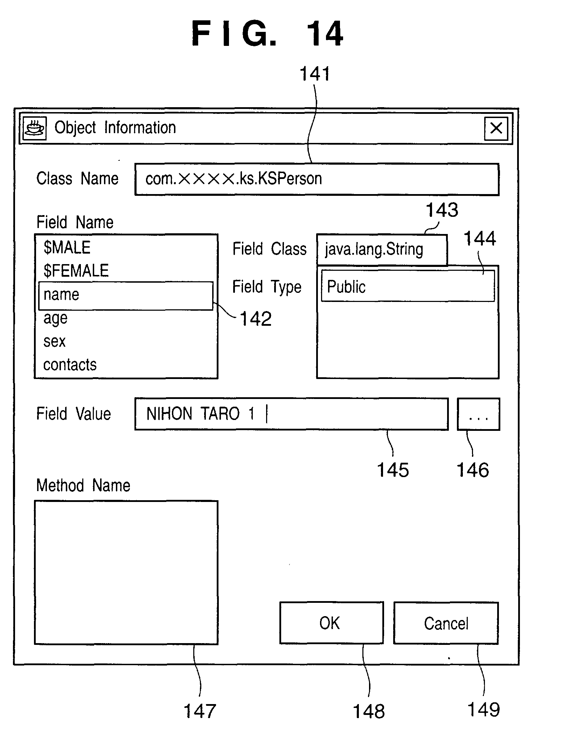

An example of an object edit window upon editing an existing object, which is displayed by the object select/edit process corresponding to the object edit instruction in the event-induced process in step s805 will be described below using Fig. 14.

Fig. 14 shows an example of the object edit window upon editing an existing object in this embodiment.

Fig. 14 shows a state wherein the value of a field name "name" 142 has been changed from "Nippon Taro" in the new creation state shown in Fig. 11 to "Nippon Tarol", as indicated by 145.

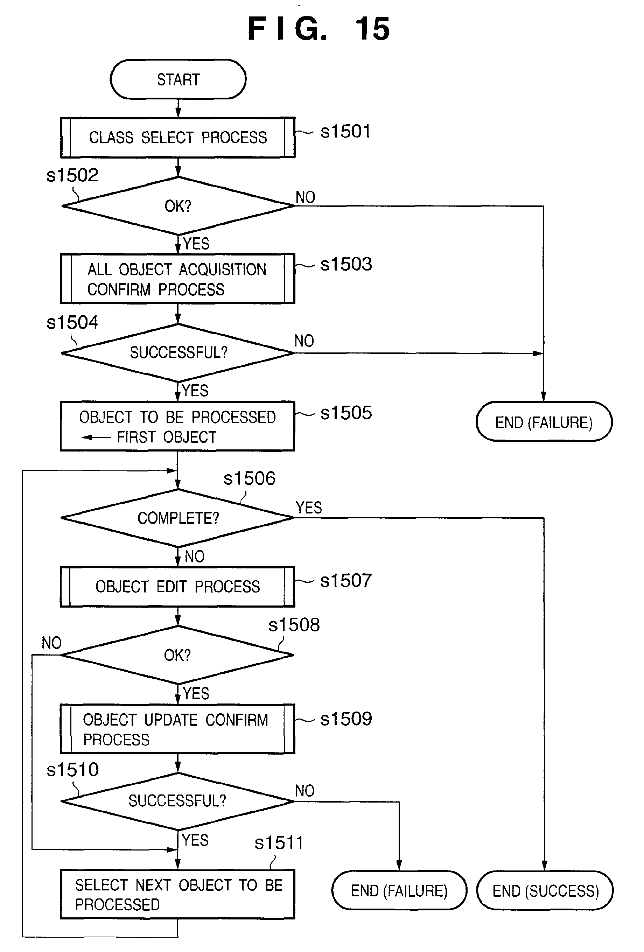

Details of the object select/edit process corresponding to the object edit instruction in the event-induced process in step s805 will be described below using Fig. 15.

Fig. 15 is a flow chart showing details of the object select/edit process of this embodiment.

When the object select/edit process is launched, a class select process is executed in step s1501 to display the class select window described using Fig. 13, thus accepting user's choice.

It is checked in step s1502 if edit of objects corresponding to the class has been instructed as a result of the class select process. If edit of objects has not been instructed (NO in step s1502), the processing ends as "failure". On the other hand, if edit of objects has been instructed (YES in step s1502), the flow advances to step s1503.

In step s1503, an all object acquisition confirm process is executed to acquire all objects corresponding to the selected class.

It is then checked in step s1504 if acquisition of objects has succeeded as a result of the all object acquisition confirm process. If acquisition of objects has failed (NO in step s1504), the processing ends as "failure". On the other hand, if acquisition of objects has succeeded (YES in step s1504), the flow advances to step s1505.

In step s1505, an object to be processed is reset to the first one of all the acquired objects, and processes for individual objects are repeated in the subsequent steps.

It is checked in step s1506 if the processes for all objects to be processed are complete. If the processes for all objects to be processed are complete (YES in step s1506), the processing ends as "success". On the other hand, if the processes for all objects to be processed are not complete (NO in step s1506), the flow advances to step s1507.

In step s1507, an object edit process is executed to display the object edit window described using Fig. 14, thus accepting user's operation.

It is checked in step s1508 if confirmation of the edit contents of the object has been instructed as a result of the object edit process. If confirmation of the edit contents of the object has not been instructed (NO in step s1508), the flow jumps to step s1511. On the other hand, if confirmation of the edit contents of the object has been instructed (YES in step s1508), the flow advances to step s1509.

In step s1509, an object update confirm process is executed to update data in the database by the confirmed edit contents, thus confirming the result.

It is then checked in step s1510 if update of data has succeeded as a result of the object update confirm process. If update of data has failed (NO in step s1510), the processing ends as "failure". On the other hand, if update of data has succeeded (YES in step s1510), the flow advances to step s1511.

In step s1511, the next object is selected as the object to be processed, and the flow returns to step s1506 to repeat the process.

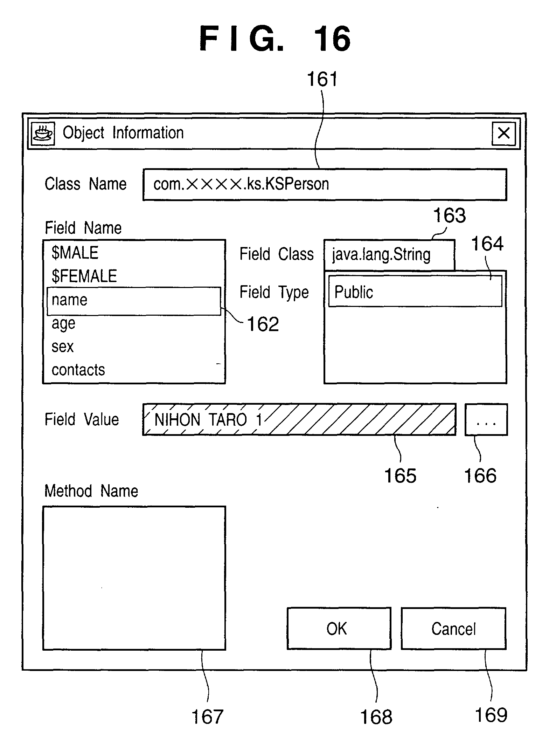

An example of an object reference window upon referring to an existing object, which is displayed by an object select/delete process corresponding to an object delete instruction in the event-induced process in step s805 will be described below using Fig. 16.

Fig. 16 shows an example of the object reference window upon referring to an existing object in this embodiment.

Unlike in the new creation state in Fig. 11 or the edit state shown in Fig. 14, an input area 165 of the value stored in a field 162 is inactive, i.e., is displayed in gray, as shown in Fig. 16.

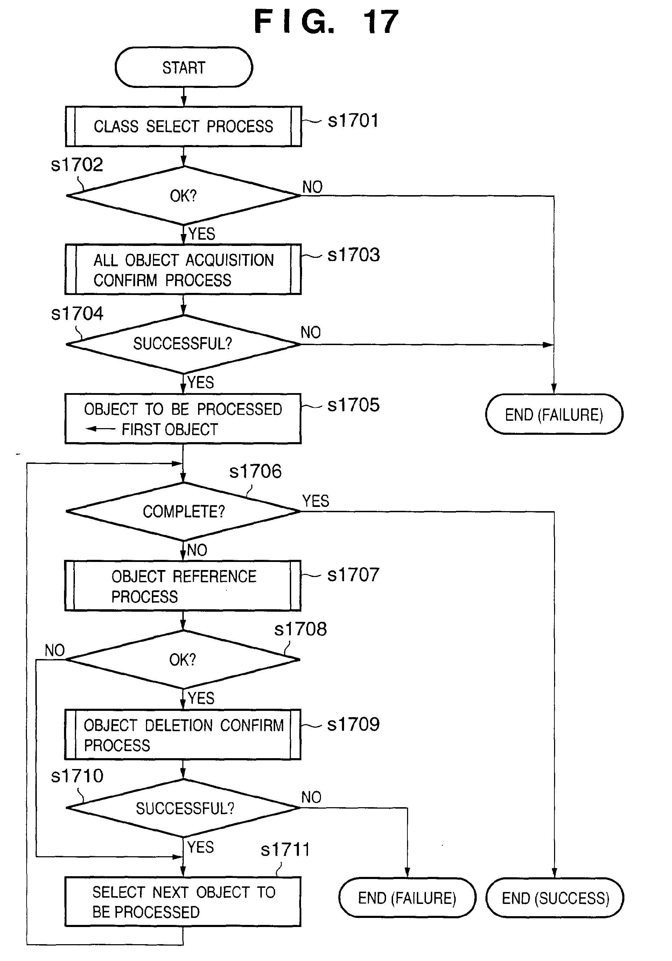

Details of the object select/delete process corresponding to the object delete instruction in the event-induced process in step s805 will be described below using Fig. 17.

Fig. 17 is a flow chart showing details of the object select/delete process of this embodiment.

When the object select/delete process is launched, a class select process is executed in step s1701 to display the class select window described using Fig. 13, thus accepting user's choice.

It is checked in step s1702 if deletion of objects corresponding to the class has been instructed as a result of the class select process. If deletion of objects has not been instructed (NO in step s1702), the processing ends as "failure". On the other hand, if deletion of objects has been instructed (YES in step s1702), the flow advances to step s1703.

In step s1703, an all object acquisition confirm process is executed to acquire all objects corresponding to the selected class.

It is then checked in step s1704 if acquisition of objects has succeeded as a result of the all object acquisition confirm process. If acquisition of objects has failed (NO in step s1704), the processing ends as "failure". On the other hand, if acquisition of objects has succeeded (YES in step s1704), the flow advances to step s1705.

In step s1705, an object to be processed is reset to the first one of all the acquired objects, and processes for individual objects are repeated in the subsequent steps.

It is checked in step s1706 if the processes for all objects to be processed are complete. If the processes for all objects to be processed are complete (YES in step s1706), the processing ends as "success". On the other hand, if the processes for all objects to be processed are not complete (NO in step s1706), the flow advances to step s1707.

In step s1707, an object edit process is executed to display the object reference window described using Fig. 16, thus accepting user's operation.

It is checked in step s1708 if deletion of the object has been instructed as a result of the object reference process. If deletion of the object has not been instructed (NO in step s1708), the flow jumps to step s1711. On the other hand, if deletion of the object has been instructed (YES in step s1708), the flow advances to step s1709.

In step s1709, an object deletion confirm process is executed to delete data in the database, thus confirming the result.

It is then checked in step s1710 if deletion of data has succeeded as a result of the object deletion confirm process. If deletion of data has failed (NO in step s1710), the processing ends as "failure". On the other hand, if deletion of data has succeeded (YES in step s1710), the flow advances to step s1711.

In step s1711, the next object is selected as the object to be processed, and the flow returns to step s1706 to repeat the process.

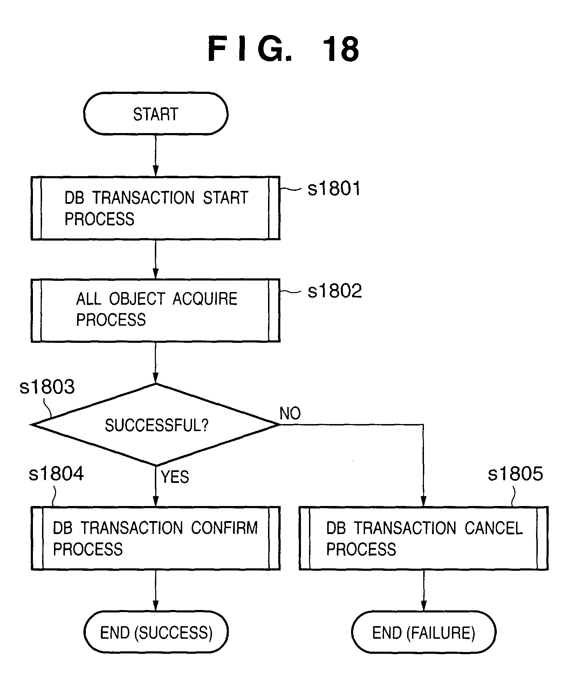

Details of the all object acquisition confirm process in steps s1503 and s1703 will be described using Fig. 18.

Fig. 18 is a flow chart showing details of the all object acquisition confirm process in steps s1503 and s1703 of this embodiment.

When the all object acquisition confirm process is launched, a DB transaction start process is executed in step s1801 to declare the start of transaction. In step s1802, an all object acquire process is executed to acquire all objects corresponding to the designated class.

It is then checked in step s1803 if acquisition of all objects has succeeded as a result of the all object acquire process. If acquisition of all objects has succeeded (YES in step s1803), the flow advances to step s1804. On the other hand, acquisition of all objects has failed (NO in step s1803), the flow advances to step s1805.

In step s1804, a DB transaction confirm process is executed to confirm processes for the database executed so far, and the processing ends as "success".

In step s1805, a DB transaction cancel process is executed to cancel processes for the database executed so far, and the processing ends as "failure".

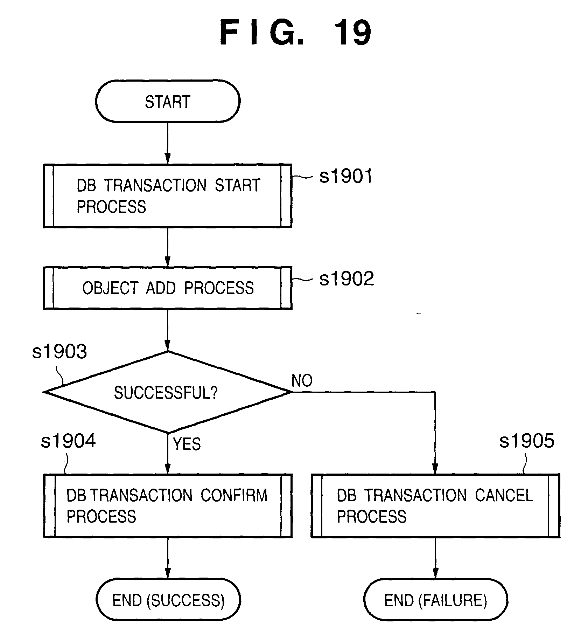

Details of the object addition confirm process in step s1007 will be described below using Fig. 19.

Fig. 19 is a flow chart showing details of the object addition confirm process in step s1007 of this embodiment.

When the object addition confirm process is launched, a DB transaction start process is executed in step s1901 to declare the start of transaction. In step s1902, an object add process is executed to add the designated object to the database.

It is then checked in step s1903 if addition of the object has succeeded as a result of the object add process. If addition of the object has succeeded (YES in step s1903), the flow advances to step s1904. On the other hand, if addition of the object has failed (NO in step s1903), the flow advances to step s1905.

In step s1904, a DB transaction confirm process is executed to confirm processes for the database executed so far, and the processing ends as "success".

In step s1905, a DB transaction cancel process is executed to cancel processes for the database executed so far, and the processing ends as "failure".

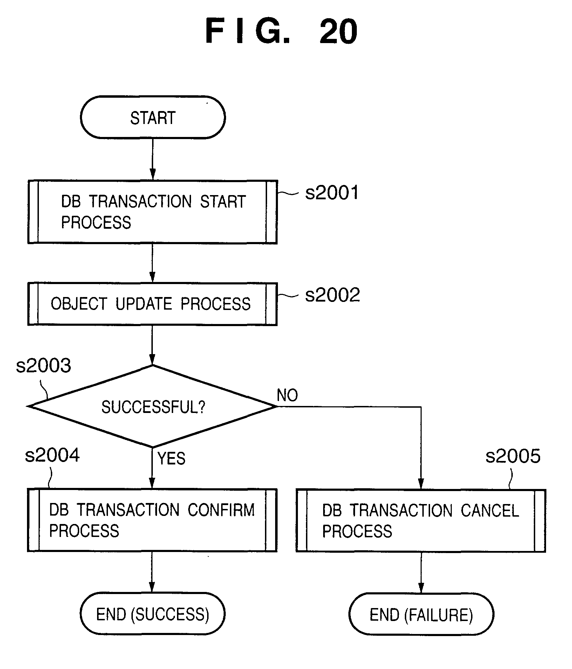

Details of the object update confirm process in step s1509 will be described below using Fig. 20.

Fig. 20 is a flow chart showing details of the object update confirm process in step s1509 of this embodiment.

When the object update confirm process is launched, a DB transaction start process is executed in step s2001 to declare the start of transaction. In step s2002, an object update process is executed to update the database with the designated object.

It is then checked in step s2003 if update of the object has succeeded as a result of the object update process. If update of the object has succeeded (YES in step s2003), the flow advances to step s2004. On the other hand, if update of the object has failed (NO in step s2003), the flow advances to step s2005.

In step s2004, a DB transaction confirm process is executed to confirm processes for the database executed so far, and the processing ends as "success".

In step s2005, a DB transaction cancel process is executed to cancel processes for the database executed so far, and the processing ends as "failure".

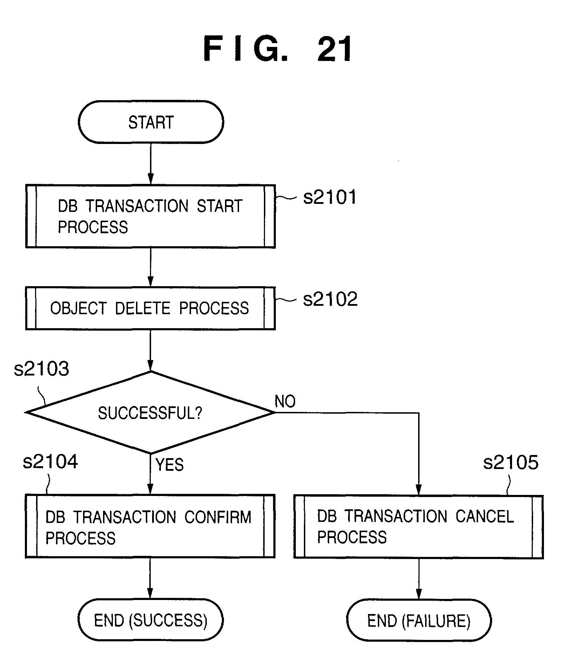

Details of the object deletion confirm process in step s1709 will be described below using Fig. 21.

Fig. 21 is a flow chart showing details of the object deletion confirm process in step s1709 of this embodiment.

If the object deletion confirm process is launched, a DB transaction start process is executed in step s2101 to declare the start of transaction. In step s2102, an object delete process is executed to delete the designated object from the database.

It is then checked in step s2103 if deletion of the object has succeeded as a result of the object delete process. If deletion of the object has succeeded (YES in step s2103), the flow advances to step s2104. On the other hand, if deletion of the object has failed (NO in step s2103), the flow advances to step s2105.

In step s2104, a DB transaction confirm process is executed to confirm processes for the database executed so far, and the processing ends as "success".

In step s2105, a DB transaction cancel process is executed to cancel processes for the database executed so far, and the processing ends as "failure".

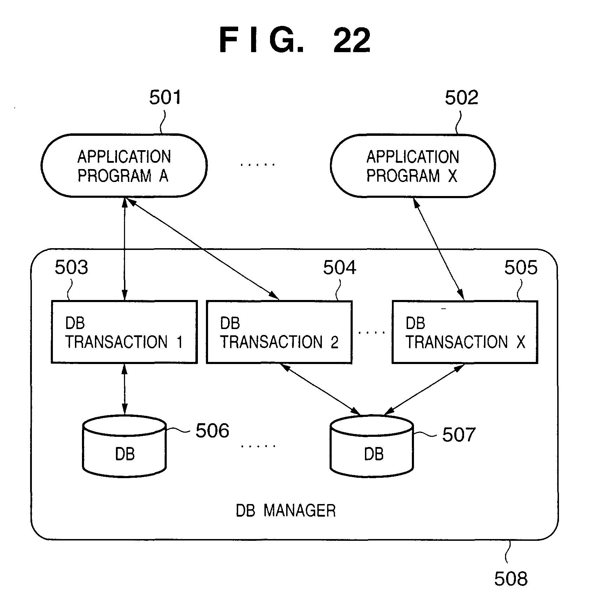

Fig. 22 is a diagram showing the functional arrangement of the information processing apparatus of this embodiment.

A DB manager 508 generates/discards DB transactions 1 (503), 2 (504),..., X(505) that process a series of transactions between pertinent databases (DBs) 506 and 507 in response to requests from one or more application programs A (501),..., X (502).

In Fig. 22, two DB transactions 1 (503) and 2 (504) are generated in response to two requests from application program A (501), and are associated with the databases 506 and 507. DB transaction X (505), which is generated in response to a request from application program X (502), is associated with the database 507 which is the same as DB transaction 2 (504).

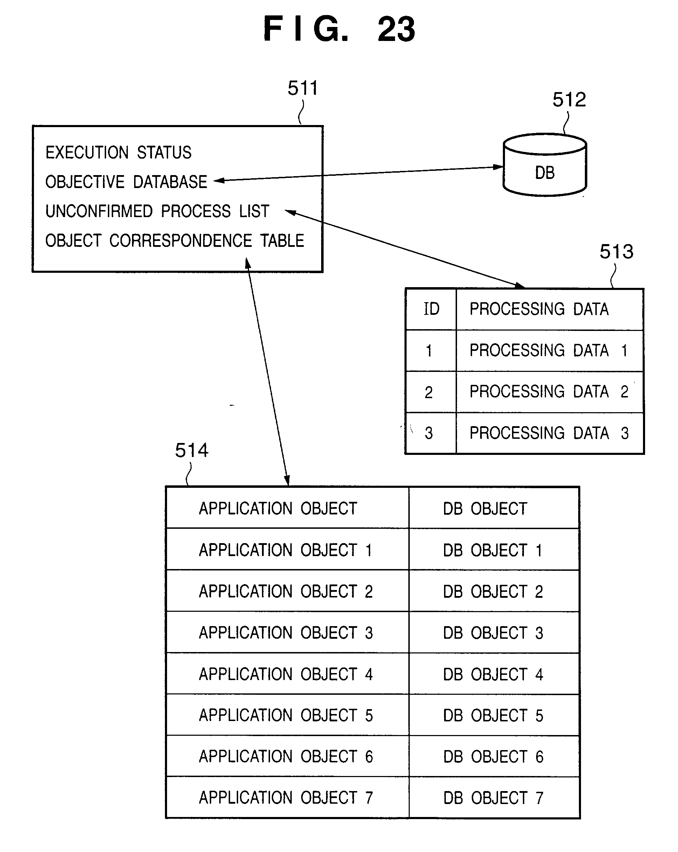

Internal data of a DB transaction will be explained below using Fig. 23.

Fig. 23 shows internal data of a DB transaction of this embodiment.

The internal data of the DB transactions include execution status indicating if execution of a transaction is in progress, database information 512 of a transaction target, a list 513 of unconfirmed processes done during execution of the transaction, and an object correspondence table 514 that stores relationships (inter-object relation information) between application objects to be processed and DB objects after generation of the transaction, as indicated by 511.

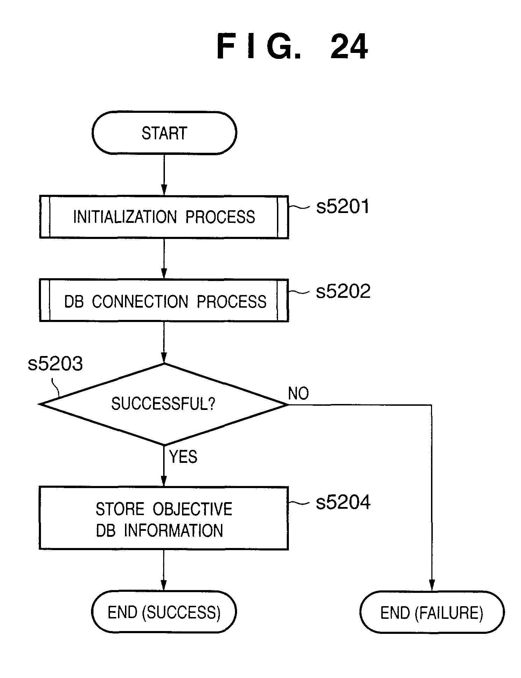

Details of the DB transaction generate process in step s603 will be described below using Fig. 24.

Fig. 24 is a flow chart showing details of the DB transaction generate process in step s603 of this embodiment.

When the DB transaction generate process is launched, an initialization process is executed in step s5201 to initialize internal data of the DB transaction described using Fig. 23.

In step s5202, a DB connection process is executed to establish connection to a database under the designated condition.

It is checked in step s5203 if connection to a database has succeeded as a result of the DB connection process. If connection has failed (NO in step s5203), the processing ends as "failure". If connection has succeeded (YES in step s5203), the flow advances to step s5204.

In step s5204, information that pertains to connection is stored in the internal data of the DB transaction, and the processing ends as "success".

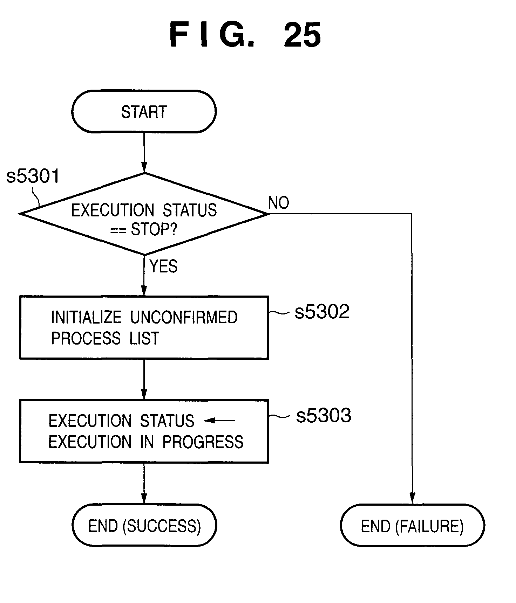

Details of the DB transaction start process in steps s1801, s1901, s2001, and s2101 in the all object acquisition confirm process in Fig. 18, the object addition confirm process in Fig. 19, the object update confirm process in Fig. 20, and the object deletion confirm process in Fig. 21 will be described below using Fig. 25.

Fig. 25 is a flow chart showing details of the DB transaction start process in steps s1801, s1901, s2001, and s2101 of this embodiment.

When the DB transaction start process is launched, it is checked in step s5301 with reference to the execution status of the internal data of the DB transaction if the execution status is "stop". If the execution status is not "stop" (NO in step s5301), the processing ends as "failure". On the other hand, if the execution status is "stop" (YES in step s5301), the flow advances to step s5302.

In step s5302, the unconfirmed process list is initialized. In step s5303, the execution status is changed to "execution in progress", and the processing ends as "success".

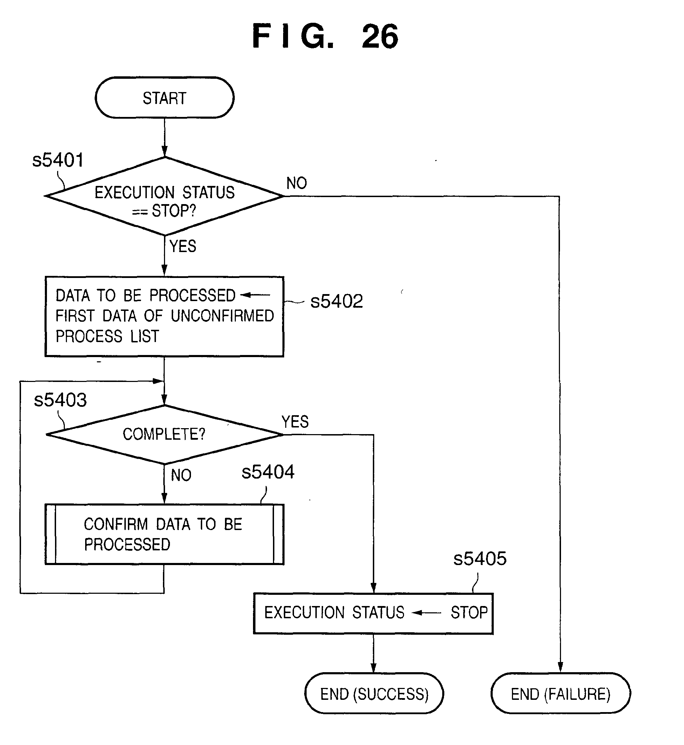

Details of the DB transaction confirm process in steps s1804, s1904, s2004, and s2104 in the all object acquisition confirm process in Fig. 18, the object addition confirm process in Fig. 19, the object update confirm process in Fig. 20, and the object deletion confirm process in Fig. 21 will be described below using Fig. 26.

Fig. 26 is a flow chart showing details of the DB transaction confirm process in steps s1804, s1904, s2004, and s2104 of this embodiment.

When the DB transaction confirm process is launched, it is checked in step s5401 with reference to the execution status of the internal data of the DB transaction if the execution status is "execution in progress". If the execution status is not "execution in progress" (NO in step s5401), the processing ends as "failure". On the other hand, if the execution status is "execution in progress" (YES in step s5401), the flow advances to step s5402.

In step s5402, data to be processed is set at the head of the unconfirmed process list, and processes are repeated for all data to be processed in the subsequent steps.

It is checked in step s5403 if the processes for all data to be processed are complete. If the processes for all data to be processed are not complete (NO in step s5403), the flow advances to step s5404 to execute a data confirm process to confirm processing contents as the data to be processed in the database, and the flow returns to step s5403. On the other hand, if the processes for all data to be processed are complete (YES in step s5403), the flow advances to step s5405 to change the execution status to "stop", and the processing ends as "success".

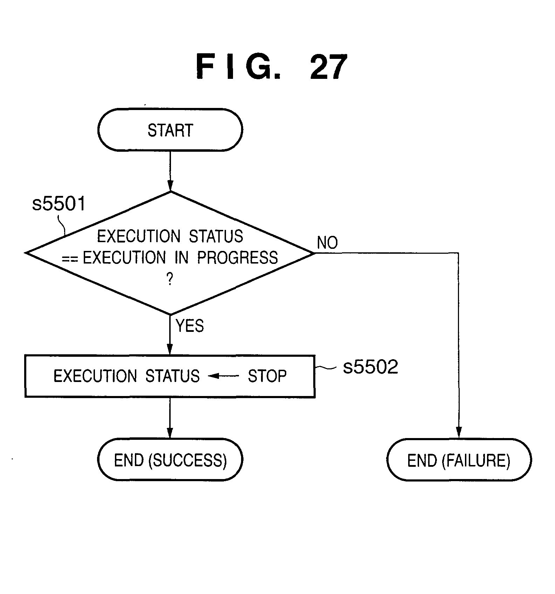

Details of the DB transaction cancel process in steps s1805, s1905, s2005, and s2105 in the all object acquisition confirm process in Fig. 18, the object addition confirm process in Fig. 19, the object update confirm process in Fig. 20, and the object deletion confirm process in Fig. 21 will be described below using Fig. 27.

Fig. 27 is a flow chart showing details of the DB transaction cancel process in steps s1805, s1905, s2005, and s2105 of this embodiment.

When the DB transaction cancel process is launched, it is checked in step s5501 with reference to the execution status of the internal data of the DB transaction if the execution status is "execution in progress". If the execution status is not "execution in progress" (NO in step s5501), the processing ends as "failure". On the other hand, if the execution status is "execution in progress" (YES in step s5501), the flow advances to step s5502.

In step s5502, the execution status is changed to "stop", and the processing ends as "success".

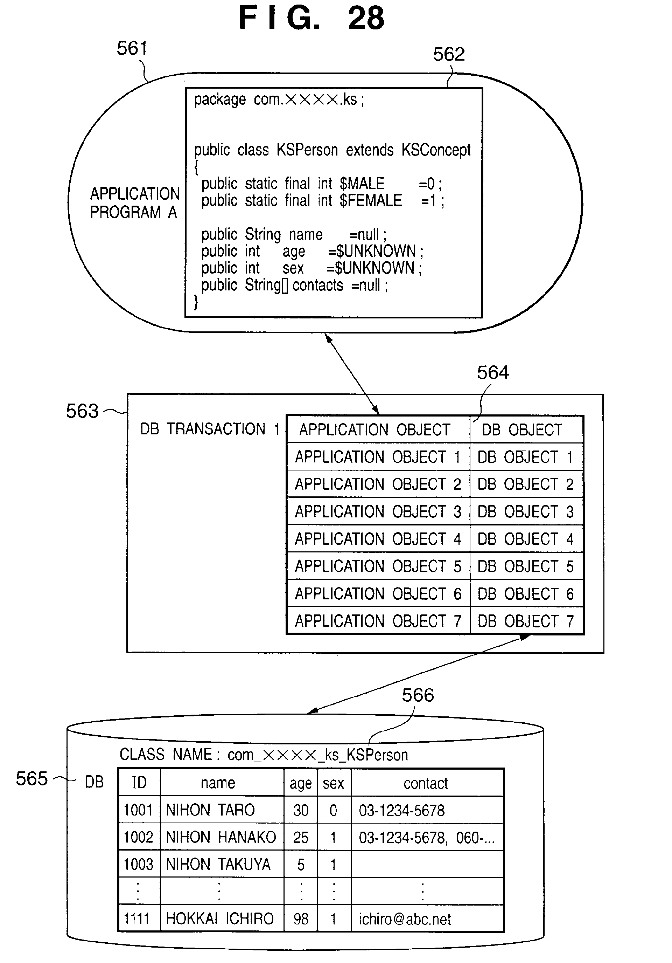

The relations among objects used in the information processing apparatus of this embodiment will be described below using Fig. 28.

Fig. 28 shows the relations among objects used in the information processing apparatus of this embodiment.

In Fig. 28, a database 565 is used to use an application object 562 generated or acquired by application program A (561) as permanent data.

In this case, application program A (561) accesses the database 565 not directly but via a DB transaction 563 generated after a connection condition to the database 565 is designated.

More specifically, the application object 562 generated by application program A (561) is internally converted into a DB object 566 by a service provided by the DB transaction 563, and the DB object 566 is stored in the database 565. At the same time, an object correspondence table 564 that stores the relation between the application object 562 and DB object 566 is updated.

Conversely, after the DB object 566 stored in the database 565 is internally converted into the application object 562 by a service provided by the DB transaction 563, the application object 562 can be processed. At the same time, the object correspondence table 564 that stores the relation between the application object 562 and DB object 566 is updated.

With the above process, application program A (561) can acquire, add, update, and delete data stored in the database 565 as the application object 562 irrespective of the object structure in the database 565.

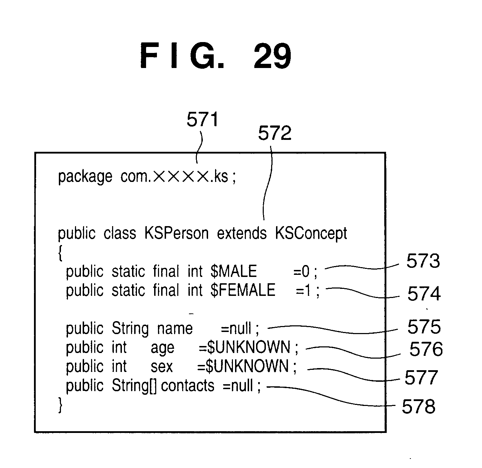

Programming codes of an application object used in the information processing apparatus of this embodiment will be described below using Fig. 29.

Fig. 29 shows programming codes of an application object used in the information processing apparatus of this embodiment.

Referring to Fig. 29, reference numeral 571 denotes a package name indicating a group of classes generated from programming codes. Reference numeral 572 denotes a class name in that package. In practice, the class name of a class generated from the programming codes is "com.xxxx.ks.KSPerson" as a combination with the package name.

Reference numerals 573 to 578 denote definitions and default values of fields of the class. For example, the definitions shown in Fig. 29 include six fields $MALE, $FEMALE, name, age, sex, and contacts which can be referred to from outside the class. Of these fields, $MALE and $FEMALE are defined to be non-rewritable.

Note that an application object of the information processing apparatus of this embodiment is obtained by converting a class generated from the programming codes into an instance, and application object definition information that defines the application object can be acquired by exploiting a service of the application object.

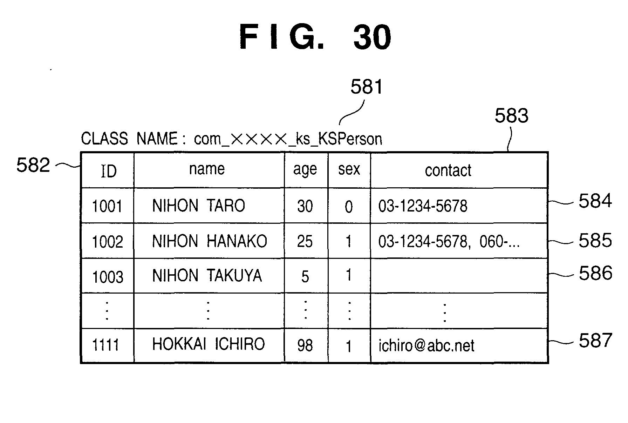

A list of database objects used in the information processing apparatus of this embodiment will be described below using Fig. 30.

Fig. 30 shows a list of database objects of this embodiment.

Note that each line of this list is database object definition information that defines a database object.

Referring to Fig. 30, reference numeral 581 denotes a class name in the database. Reference numeral 582 denotes an identification ID unique to each database object. Reference numeral 583 denotes a field name corresponding to each field of the application object. In Fig. 30, each object has four fields "name", "age", "sex", and "contacts".

Reference numerals 584 to 587 denote actual values of database objects.

Note that the class name in the database does not always match that of the application object, as shown in Fig. 30.

Also, not all field values of the application object are stored in the database object, as shown in Fig. 30. For example, even when the values of write-inhibited fields of those of the application object are stored in the database object, they cannot be written in the application object or are automatically initialized upon creation of a default instance of the application object. Hence, such field values need not be stored in the database object.

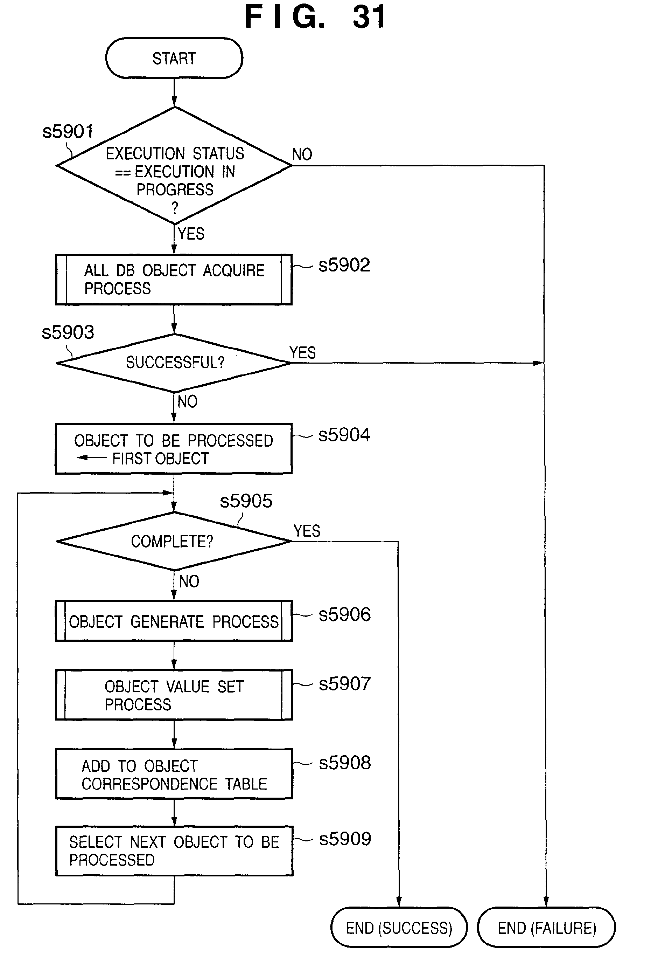

Details of the all object acquire process in step s1802 will be described below using Fig. 31.

Fig. 31 is a flow chart showing details of the all object acquire process of this embodiment.

When the all object acquire process is launched, it is checked in step s5901 with reference to the execution status of the internal data of the DB transaction if the execution status is "execution in progress". If the execution status is not "execution in progress" (NO in step s5901), the processing ends as "failure". On the other hand, if the execution status is "execution in progress" (YES in step s5901), the flow advances to step s5902.

In step s5902, an all DB object acquire process is executed to acquire all objects in the database corresponding to the designated class.

It is checked in step s5903 if acquisition of all objects has succeeded as a result of the DB object acquire process. If acquisition of all objects has failed (NO in step s5903), the processing ends as "failure". On the other hand, if acquisition of all objects has succeeded (YES in step s5903), the flow advances to step s5904.

In step s5904, the first one of the acquired objects of the database is set to be an object to be processed, and processes are repeated for all objects to be processed in the subsequent steps.

It is checked in step s5905 if the processes for all the objects to be processed are complete. If the processes for all the objects to be processed are complete (YES in step s5905), the processing ends as "success". On the other hand, if the processes for all the objects to be processed are not complete (NO in step s5905), the flow advances to step s5906.

In step s5906, an object generate process is executed to generate a default instance of the designated class. In step s5907, an object value set process is executed to set values in the respective fields of the generated application object with reference to values of the database object to be processed. Furthermore, in step s5908 a combination of the generated application object and acquired database object is added to the object correspondence table. After that, the next object is selected as the object to be processed in step s5909, and the flow returns to step s5905 to repeat the process.

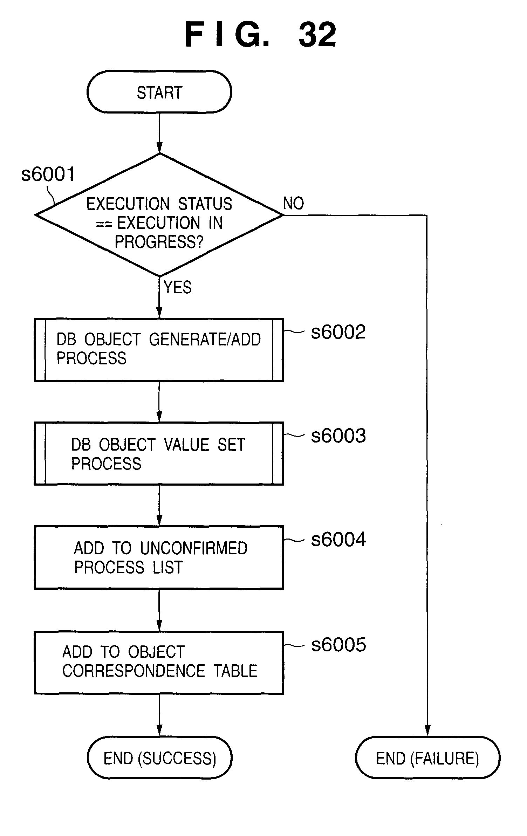

Details of the object add process in step s1902 will be described below using Fig. 32.

Fig. 32 is a flow chart showing details of the object add process in step s1902 of this embodiment.

When the object add process is launched, it is checked in step s6001 with reference to the execution status of the internal data of the DB transaction if the execution status is "execution in progress". If the execution status is not "execution in progress" (NO in step s6001), the processing ends as "failure". On the other hand, if the execution status is "execution in progress" (YES in step s6001), the flow advances to step s6002.

In step s6002, a DB object generate/add process is executed to generate and add a database object of a class in the database corresponding to the class of a given application object.

In step s6003, a DB object value set process is executed to set values in the respective fields of the generated and added database object with reference to the values of the given application object.

After that, information corresponding to the above process is added to the unconfirmed process list in step s6004. In step s6005, a combination of the given application object and the generated and added database object is added to the object correspondence table, and the processing ends as "success".

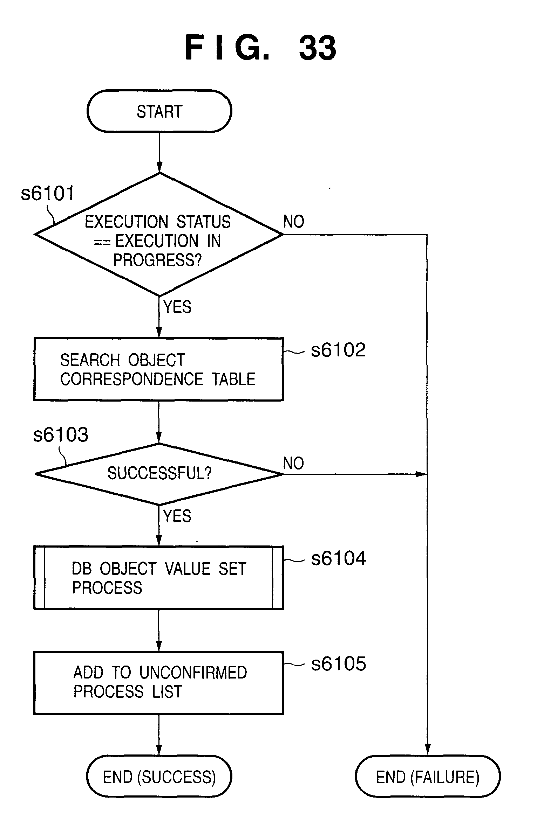

Details of the object update process in step s2002 will be described below using Fig. 33.

Fig. 33 is a flow chart showing details of the object update process in step s2002 of this embodiment.

When the object update process is launched, it is checked in step s6101 with reference to the execution status of the internal data of the DB transaction if the execution status is "execution in progress". If the execution status is not "execution in progress" (NO in step s6101), the processing ends as "failure". On the other hand, if the execution status is "execution in progress" (YES in step s6101), the flow advances to step s6102.

In step s6102, the object correspondence table is searched for a database object corresponding to a given application object.

It is checked in step s6103 if the search has succeeded as a result of the search. If the search has failed (NO in step s6103), the processing ends as "failure". On the other hand, if the search has succeeded (YES in step s6103), the flow advances to step s6104.

In step s6104, a DB object value set process is executed to set values in the fields of the database object found by search with reference to the values of the given application object.

After that, information corresponding to the above process is added to the aforementioned unconfirmed process list in step s6105, and the processing ends as "success".

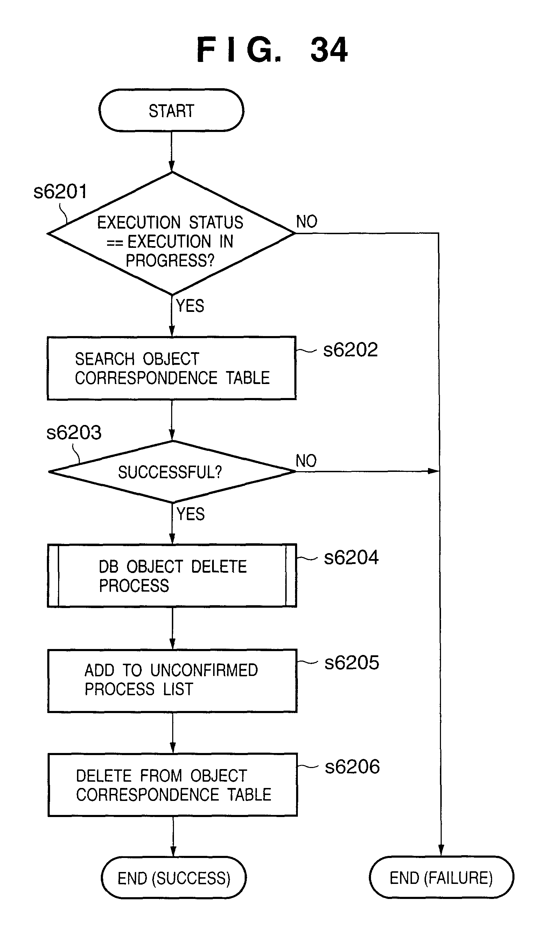

Details of the object delete process in step s2102 will be described below using Fig. 34.

Fig. 34 is a flow chart showing details of the object delete process in step s2102 of this embodiment.

When the object delete process is launched, it is checked in step s6201 with reference to the execution status of the internal data of the DB transaction if the execution status is "execution in progress". If the execution status is not "execution in progress" (NO in step s6201), the processing ends as "failure". On the other hand, if the execution status is "execution in progress" (YES in step s6201), the flow advances to step s6202.

In step s6202, the object correspondence table is searched for a database object corresponding to a given application object.

It is checked in step s6203 if the search has succeeded as a result of the search. If the search has failed (NO in step s6203), the processing ends as "failure". On the other hand, if the search has succeeded (YES in step s6203), the flow advances to step s6204.

In step s6204, a DB object delete process is executed to delete the database object found by search.

After that, information corresponding to the above process is added to the aforementioned unconfirmed process list in step s6205. In step s6206, a combination of the given application object and the deleted database object is deleted from the object correspondence table, and the processing ends as "success".

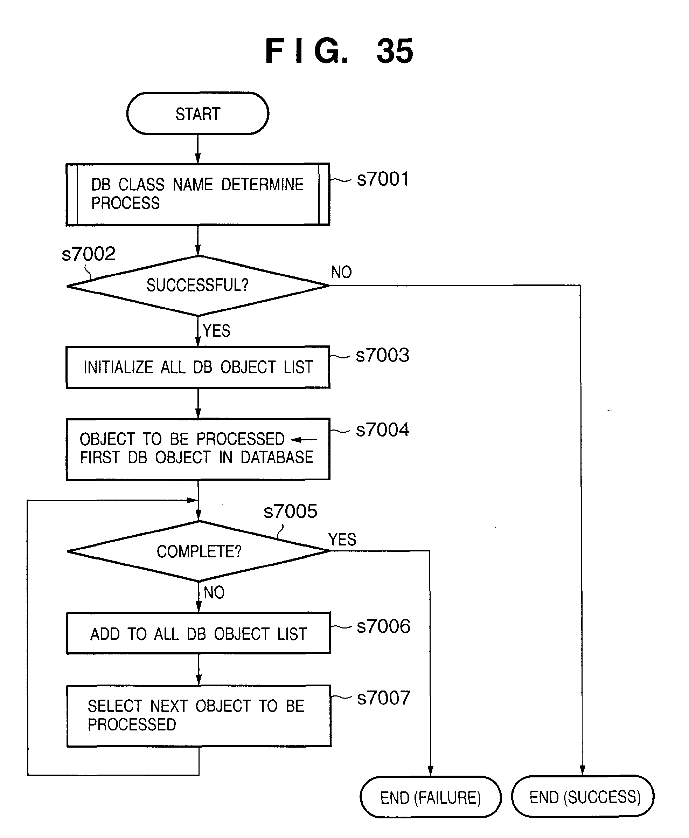

Details of the all DB object acquire process in step s5902 will be described below using Fig. 35.

Fig. 35 is a flow chart showing details of the all DB object acquire process in step s5902 of this embodiment.

When the all DB object acquire process is launched, a DB class name determine process is executed in step s7001 to determine the database class name in the database corresponding to the application class name of a given application class.

When the class name cannot use "." as in the database used in this embodiment, a result obtained by substituting such character by that which can be used in the database (e.g., "_") is used as the database class name. For example, a database class name "com_xxxx_ks_KSPerson" is determined from the application class name "com.xxxx.ks.KSPerson".

It is checked in step s7002 if determination of the database class name has succeeded as a result of the DB class name determine process. If determination of the database class name has failed (NO in step s7002), the processing ends as "failure". On the other hand, if determination of the database class name has succeeded (YES in step s7002), the flow advances to step s7003.

In step s7003, an all database object list for output is initialized. In step s7004, the first one of database objects corresponding to the database class in the database is set as an object to be processed, and processes are repeated for all database objects to be processed in the subsequent steps.

It is checked in step s7005 if the processes for all the database objects to be processed are complete. If the processes for all the database objects to be processed are complete (YES in step s7005), the processing ends as "success". On the other hand, if the processes for all the database objects to be processed are not complete (NO in step s7005), the flow advances to step s7006.

In step s7006, the database object to be processed is added to the all database object list. After that, the next database object is selected as the object to be processed in step s7007, and the flow returns to step s7005 to repeat the process.

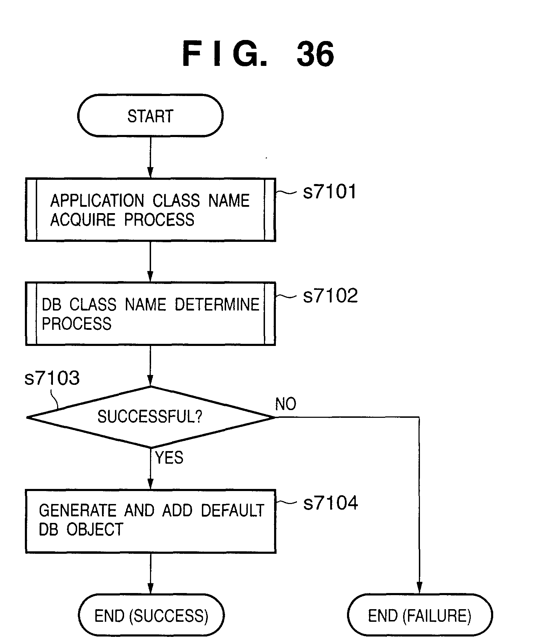

Details of the DB object generate/add process in step s6002 will be described below using Fig. 36.

Fig. 36 is a flow chart showing details of the DB object generate/add process in step s6002 of this embodiment.

When the DB object generate/add process is launched, an application class name acquire process is executed in step s7101 to acquire the application class name of a given application object. In step s7102, a DB class name determine process is executed to determine the database class name in the database corresponding to the application class name.

It is checked in step s7103 if determination of the database class name has succeeded as a result of the DB class name determine process. If determination of the database class name has failed (NO in step s7103), the processing ends as "failure". On the other hand, if determination of the database class name has succeeded (YES in step s7102), the flow advances to step s7104.

In step s7104, a default database object corresponding to the database class is generated, and the processing ends as "success".

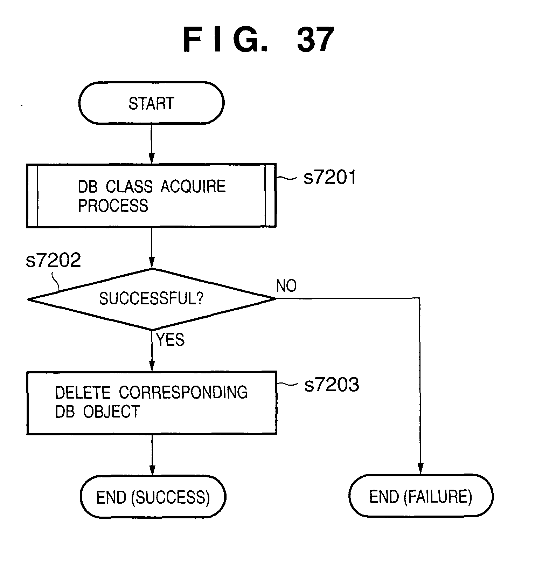

Details of the DB object delete process in step s6204 will be described below using Fig. 37.

Fig. 37 is a flow chart showing details of the DB object delete process in step s6204 of this embodiment.

When the DB object delete process is launched, a DB class acquire process is executed in step s7201 to acquire a database class corresponding a given database object.

It is checked in step s7202 if acquisition of the database class has succeeded as a result of the DB class acquire process. If acquisition of the database class has failed (NO in step s7202), the processing ends as "failure". On the other hand, if acquisition of the database class has succeeded (YES in step s7202), the flow advances to step s7203.

In step s7203, the given database object is deleted using a service of the database class, and the processing ends as "success".

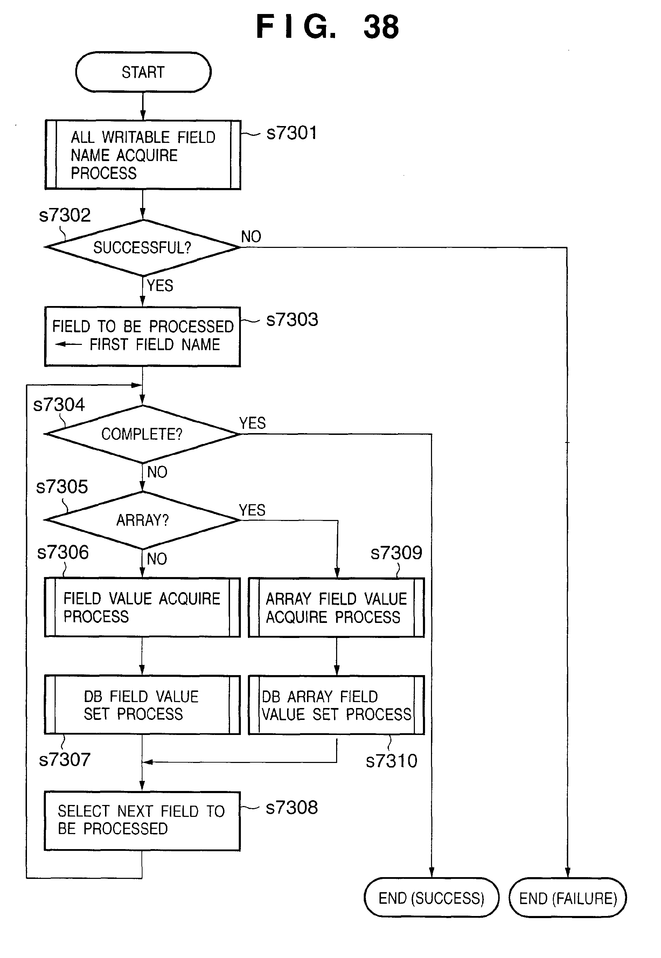

Details of the DB object value set process in steps s5907 and s6003 in the object add process in Fig. 31 and the object update process in Fig. 32 will be described below using Fig. 38.

Fig. 38 is a flow chart showing details of the DB object value set process in steps s5907 and s6003 of this embodiment.

When the DB object value set process is launched, an all writable field name acquire process is executed in step s7301 to acquire all writable field names with reference to the field definitions of a given application object.

It is checked in step s7302 if acquisition of the field names has succeeded as a result of the all writable field name acquire process. If acquisition of the field names has failed (NO in step s7302), the processing ends as "failure". On the other hand, if acquisition of the field names has succeeded (YES in step s7302), the flow advances to step s7303.

In step s7303, the first field in a list of all the acquired writable field names is set to be a field to be processed, and processes are repeated for all fields to be processed in the subsequent steps.

It is checked in step s7304 if the processes for all the fields to be processed are complete. If the processes for all the fields to be processed are complete (YES in step s7304), the processing ends as "success". On the other hand, if the processes for all the fields to be processed are not complete (NO in step s7304), the flow advances to step s7305.

It is checked in step s7305 if the field to be processed is an array. If the field is not an array (NO in step s7305), the flow advances to step s7306.

In step s7306, a field value acquire process is executed to acquire a value corresponding to the field name of the field to be processed of the given application object. In step s7307, a DB field value set process is executed to store the value in the corresponding field of the database object. In step s7308, the next field is selected as the field to be processed, and the flow returns to step s7304 to repeat the process.

On the other hand, if it is determined in step s7305 that the field to be processed is an array (YES in step s7305), the flow advances to step s7309.

In step s7309, an array field value acquire process is executed to acquire a value corresponding to the field name of the field to be processed of the given application object. In step s7310, a DB array field value set process is executed to store the value in the corresponding field of the database object. In step s7308, the next field is selected as the field to be processed, and the flow returns to step s7304 to repeat the process.

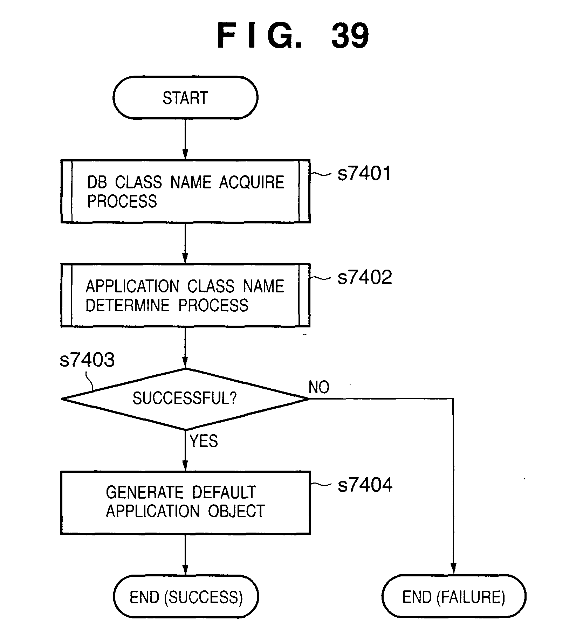

Details of the object generate process in step s5906 will be described below using Fig. 39.

Fig. 39 is a flow chart showing details of the object generate process in step s5906 of this embodiment.

When the object generate process is launched, a DB class name acquire process is executed in step s7401 to acquire the database class name of a given database object. In step s7402, an application class name determine process is executed to determine an application class name corresponding to the database class name.

It is checked in step s7403 if determination of the application class name has succeeded as a result of the application class name determine process. If determination of the application class name has failed (NO in step s7403), the processing ends as "failure". On the other hand, if determination of the application class name has succeeded (YES in step s7403), the flow advances to step s7404.

In step s7404, a default application object corresponding to the application class is generated, and the processing ends as "success".

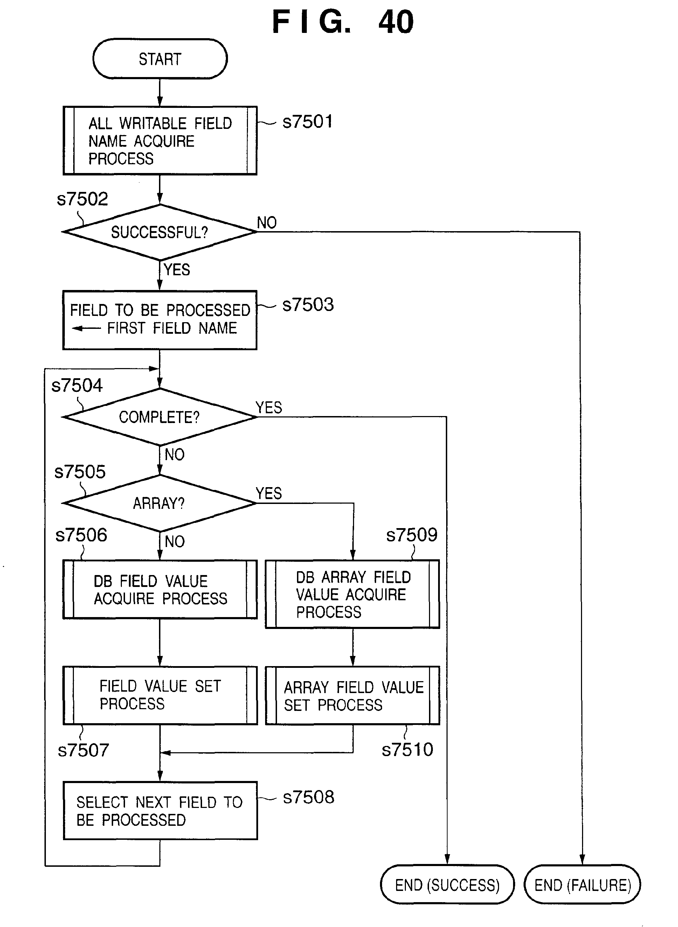

Details of the object value set process in step s5907 will be described below using Fig. 40.

Fig. 40 is a flow chart showing details of the object value set process in step s5907 of this embodiment.

When the object value set process is launched, an all writable field name acquire process is executed in step s7501 to acquire all writable field names with reference field definitions of a given application object.

It is checked in step s7502 if acquisition of the field names has succeeded as a result of the all writable field name acquire process. If acquisition of the field names has failed (NO in step s7502), the processing ends as "failure". On the other hand, if acquisition of the field names has succeeded (YES in step s7502), the flow advances to step s7503.

In step s7503, the first field in a list of all the acquired writable field names is set to be a field to be processed, and processes are repeated for all fields to be processed in the subsequent steps.

It is checked in step s7504 if the processes for all the fields to be processed are complete. If the processes for all the fields to be processed are complete (YES in step s7504), the processing ends as "success". On the other hand, if the processes for all the fields to be processed are not complete (NO in step s7504), the flow advances to step s7505.

It is checked in step s7505 if the field to be processed is an array. If the field is not an array (NO in step s7505), the flow advances to step s7506.

In step s7506, a DB field value acquire process is executed to acquire a value corresponding to the field name of the field to be processed of the given database object. In step s7507, a field value set process is executed to store the value in the corresponding field of the application object. In step s7508, the next field is selected as the field to be processed, and the flow returns to step s7504 to repeat the process.

On the other hand, if it is determined in step s7505 that the field is an array (YES in step s7505), the flow advances to step s7509.

In step s7509, a DB array field value acquire process is executed to acquire a value corresponding to the field name of the field to be processed of the given database object. In step s7510, an array field value set process is executed to store the value in the corresponding field of the application object. In step s7508, the next field is selected as the field to be processed, and the flow returns to step s7504 to repeat the process.

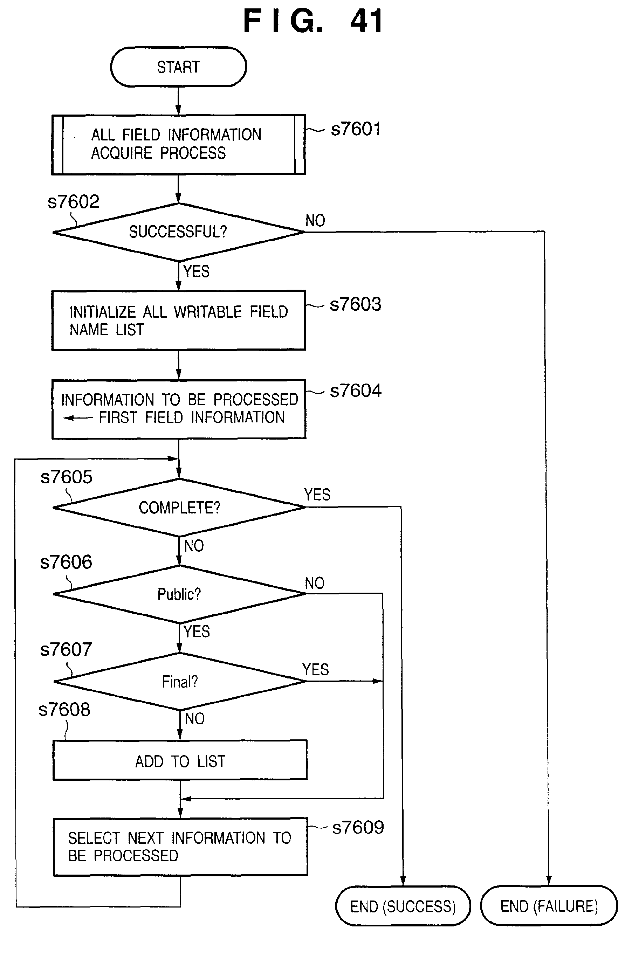

Details of the all writable field name acquire process in steps s7301 and s7501 in the DB object value set process in Fig. 38 and the object value set process in Fig. 40 will be described below using Fig. 41.

Fig. 41 is a flow chart showing details of the all writable field name acquire process in steps s7301 and s7501 of this embodiment.

When the all writable field name acquire process is launched, an all field information acquire process is executed in step s7601 to acquire each field information of a given application object.

It is checked in step s7602 if acquisition of field information has succeeded as a result of the all field information acquire process. If acquisition of field information has failed (NO in step s7602), the processing ends as "failure". On the other hand, if acquisition of field information has succeeded (YES in step s7602), the flow advances to step s7603.

In step s7603, an all writable field name list for output is initialized. In step s7604, the first one of all the pieces of acquired field information is set to be field information to be processed, and processes are repeated for all pieces of field information to be processed in the subsequent steps.

It is checked in step s7605 if the processes for all the pieces of field information to be processed are complete. If the processes for all the pieces of field information to be processed are complete (YES in step s7605), the processing ends as "success". On the other hand, if the processes for all the pieces of field information to be processed are not complete (NO in step s7605), the flow advances to step s7606.

It is checked in step s7606 if the field attribute of the field information is "Public". If the field attribute is not "Public" (NO in step s7606), the flow jumps to step s7609. On the other hand, if the field attribute is "Public" (YES in step s7606), the flow advances to step s7607.

It is checked in step s7607 if the field attribute of the field information is "Final". If the field attribute is "Final" (YES in step s7607), the flow jumps to step s7609. On the other hand, if the field attribute is not "Final" (NO in step s7607), the flow advances to step s7608.

In step s7608, the field name of the field information to be processed is added to the all writable field name list. After that, the next field information is selected as the field information to be processed in step s7609, and the flow returns to step s7605 to repeat the process.

As described above, according to this embodiment, application object definition information that defines an application object, which is referred to by an application program, is acquired with respect to a database that stores permanent data, and the database is manipulated using that application object and the acquired application object definition information.

In this way, the database can be exploited to process permanent data without learning any coding sequences unique to a database module and complicated know-how, and the developer can concentrate on the development of a unique business logic, thus greatly improving the development efficiency.

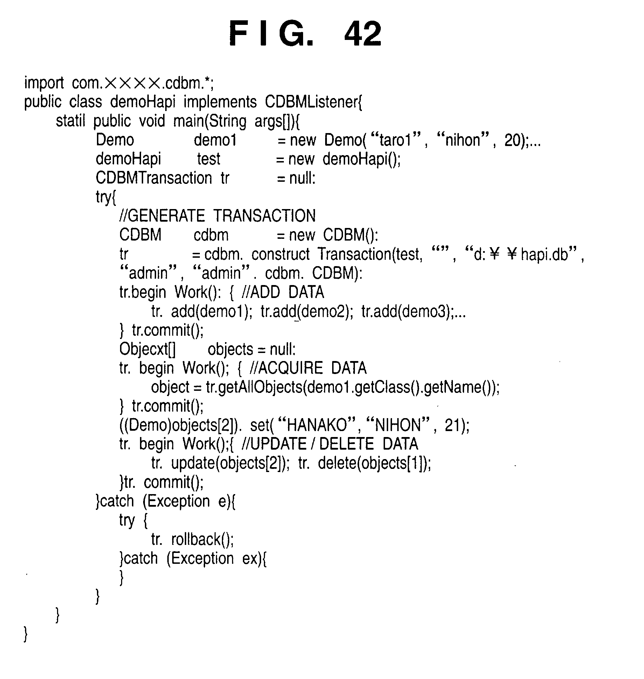

Fig. 42 shows an example of programming codes according to the present invention, which are devised to eliminate the complexity of application program development anywise. In this way, an application programmer can acquire, add, update, and delete data simply using only services provided by the class for database access without learning any special knowledge or executing any pre-process and post-process.

Note that the present invention may be applied to either a system constituted by a plurality of devices (e.g., a host computer, an interface device, a reader, a printer, and the like), or an apparatus consisting of a single equipment (e.g., a copying machine, a facsimile apparatus, or the like).

The objects of the present invention are also achieved by supplying a storage medium, which records a program code of a software program that can implement the functions of the above-mentioned embodiments to the system or apparatus, and reading out and executing the program code stored in the storage medium by a computer (or a CPU or MPU) of the system or apparatus.

In this case, the program code itself read out from the storage medium implements the functions of the above-mentioned embodiments, and the storage medium which stores the program code constitutes the present invention.

As the storage medium for supplying the program code, for example, a floppy disk, hard disk, optical disk, magneto-optical disk, CD-ROM, CD-R, magnetic tape, nonvolatile memory card, ROM, and the like may be used.

The functions of the above-mentioned embodiments may be implemented not only by executing the readout program code by the computer but also by some or all of actual processing operations executed by an OS (operating system) running on the computer on the basis of an instruction of the program code.

Furthermore, the functions of the above-mentioned embodiments may be implemented by some or all of actual processing operations executed by a CPU or the like arranged in a function extension board or a function extension unit, which is inserted in or connected to the computer, after the program code read out from the storage medium is written in a memory of the extension board or unit.

When the present invention is applied to the storage medium, the storage medium stores program codes corresponding to the flow charts shown in Figs. 2, 8, 12, 15, 17 to 21, 24 to 27, and 31 to 41 described above.

As many apparently widely different embodiments of the present invention can be made without departing from the spirit and scope thereof, it is to be understood that the invention is not limited to the specific embodiments thereof except as defined in the appended claims.

Further, the program code can be obtained in electronic form for example by downloading the code over a network such as the internet. Thus in accordance with another aspect of the present invention there is provided an electrical signal carrying processor implementable instructions for controlling a processor to carry out the method as hereinbefore described.

## Claims

1. An information processing apparatus for processing a database that manages data, by comprising:
a database for storing the data; and
database manipulation means for manipulating said database using an application object which is referred to by an application program.

2. The apparatus according to claim 1, wherein said database is an object-oriented database.

3. The apparatus according to claim 1 or 2, wherein said database further stores a database object, and said database manipulation means is processed using the database object.

4. The apparatus according to any one of claims 1 to 3, further comprising:
application object definition information acquisition means for acquiring application object definition information that defines the application object, and
in that said database manipulation means is processed using the application object definition information.

5. The apparatus according to claim 4, wherein said application object definition information acquisition means acquires the application object definition information using a designated class name.

6. The apparatus according to claim 4, further comprising:
determination means for determining database object definition information that defines the database object corresponding to the application object definition information, and
in that said database manipulation means is processed using the database object definition information.

7. The apparatus according to claim 6, wherein said database manipulation means comprises:
database object acquisition means for acquiring the database object that satisfies the database object definition information;
application object generation means for generating an application object corresponding to the application object definition information;
database object value acquisition means for acquiring a value of the database object corresponding to the database object definition information; and
application object value storage means for storing the value of the database object in an empty application object generated by said application object generation means.

8. The apparatus according to claim 7, wherein said application object value storage means comprises:
field name acquisition means for acquiring a writable field name of the application object; and
database object field name determination means for determining a field name of the database object corresponding to the field name of the application object, and
said database object value acquisition means acquires a value of the database object from only a field of the database object corresponding to the field name of the application object field.

9. The apparatus according to any one of claims 4 to 6, further comprising:
application object value acquisition means for acquiring a value of the application object corresponding to the application object definition information, and
in that said database manipulation means is processed using the value of the application object.

10. The apparatus according to claim 9, further comprising:
database object generation means for generating the database object corresponding to the database object definition information;
database object value storage means for storing a value of the application object in the database object; and
database object addition means for adding the database object to said database.

11. The apparatus according to any one of claims 1 to 6 and claim 9, further comprising:
an object correspondence table for storing inter-object relation information indicating a relation between the application object and the database object, and
in that said database manipulation means is processed using said object correspondence table.

12. The apparatus according to claim 11, further comprising:
object correspondence table update means for updating said object correspondence table.

13. The apparatus according to claim 12, wherein said object correspondence table update means adds the inter-object relation information upon acquiring the application object to said object correspondence table.

14. The apparatus according to claim 12, wherein said object correspondence table update means adds the inter-object relation information upon adding the application object to said object correspondence table.

15. The apparatus according to claim 12, wherein said object correspondence table update means deletes the inter-object relation information upon deleting the application object from said object correspondence table.

16. The apparatus according to claim 11, further comprising:
related database object acquisition means for acquiring the database object corresponding to the application object on the basis of the inter-object relation information.

17. The apparatus according to claim 9 or 16, further comprising:
database object value storage means for storing a value of the application object in the database object; and
database object update means for adding the database object to said database.

18. The apparatus according to claim 16, further comprising:
database object deletion means for deleting the database object from said database.

19. The apparatus according to claim 10 or 17, wherein said database object value storage means comprises:
field name acquisition means for acquiring a writable field name of the application object; and
database object field name determination means for determining a field name of the database object corresponding to the field name of the application object, and
said database object value storage means stores a value of the application object in a field of the database object corresponding to the field name of the application object.

20. An information processing method for processing a database that manages data, comprising:
a holding step of holding a database for storing the data; and
a database manipulation step of manipulating said database using an application object which is referred to by an application program.

21. The method according to claim 20, wherein said database is an object-oriented database.

22. The method according to claim 20 or 21, wherein said database further stores a database object, and the database manipulation step is processed using the database object.

23. The method according to any one of claims 20 to 22, further comprising:
an application object definition information acquisition step of acquiring application object definition information that defines the application object, and
in that the database manipulation step is processed using the application object definition information.

24. The method according to claim 23, wherein the application object definition information acquisition step includes the step of acquiring the application object definition information using a designated class name.

25. The method according to claim 23, further comprising:
a determination step of determining database object definition information that defines the database object corresponding to the application object definition information, and
in that the database manipulation step is processed using the database object definition information.

26. The method according to claim 25, wherein the database manipulation step comprises:
a database object acquisition step of acquiring the database object that satisfies the database object definition information;
an application object generation step of generating an application object corresponding to the application object definition information;
a database object value acquisition step of acquiring a value of the database object corresponding to the database object definition information; and
an application object value storage step of storing the value of the database object in an empty application object generated in the application object generation step.

27. The method according to claim 26, wherein the application object value storage step comprises:
a field name acquisition step of acquiring a field name of the application object; and
a database object field name determination step of determining a field name of the database object corresponding to the field name of the application object, and
a database object value acquisition step includes the step of acquiring a value of the database object from only a field of the database object corresponding to the field name of the application object field.

28. The method according to any one of claims 23 to 25, further comprising:
an application object value acquisition step of acquiring a value of the application object corresponding to the application object definition information, and
in that the database manipulation step is processed using the value of the application object.

29. The method according to claim 28, further comprising:
a database object generation step of generating the database object corresponding to the database object definition information;
a database object value storage step of storing a value of the application object in the database object; and
a database object addition step of adding the database object to said database.

30. The method according to any one of claims 20 to 25 and claim 28, wherein the holding step further holds an object correspondence table for storing inter-object relation information indicating a relation between the application object and the database object, and
a database manipulation step is processed using said object correspondence table.

31. The method according to claim 30, further comprising:
an object correspondence table update step of updating said object correspondence table.

32. The method according to claim 31, wherein the object correspondence table update step includes the step of adding the inter-object relation information upon acquiring the application object to said object correspondence table.

33. The method according to claim 31, wherein the object correspondence table update step includes the step of adding the inter-object relation information upon adding the application object to said object correspondence table.

34. The method according to claim 31, wherein the object correspondence table update step includes the step of deleting the inter-object relation information upon deleting the application object from said object correspondence table.

35. The method according to claim 30, further comprising:
a related database object acquisition step of acquiring the database object corresponding to the application object on the basis of the inter-object relation information.

36. The method according to claim 28 or 35, further comprising:
a database object value storage step of storing a value of the application object in the database object; and
a database object update step of adding the database object to said database.

37. The method according to claim 35, further comprising:
a database object deletion step of deleting the database object from said database.

38. The method according to claim 29 or 36, wherein the database object value storage step comprises:
a field name acquisition step of acquiring a field name of the application object; and
a database object field name determination step of determining a field name of the database object corresponding to the field name of the application object, and
a database object value storage step includes the step of storing a value of the application object in a field of the database object corresponding to the field name of the application object.

39. A computer readable memory that stores a program code of information processing for processing a database that manages data, comprising:
a program code of a holding step of holding a database for storing the data; and
a program code of a database manipulation step of manipulating said database using an application object which is referred to by an application program.

40. An electrical signal carrying processor implementable instructions for controlling a processor to carry out the method of any one of claims 20 to 38.
